Europäisches Patentamt

European Patent Office

Office européen des brevets

(19)

(11) EP 0 382 581 B1

# (12) EUROPEAN PATENT SPECIFICATION

(45) Date of publication and mention
of the grant of the patent:
**08.05.1996 Bulletin 1996/19**

(51) Int Cl.⁶: **H04N 1/40**

(21) Application number: **90301476.9**

(22) Date of filing: **12.02.1990**

(54) **Image processing apparatus**

Bildverarbeitungsvorrichtung

Appareil de traitement d'images

(84) Designated Contracting States:
**DE FR GB**

(30) Priority: 10.02.1989 JP 31404/89
10.02.1989 JP 31405/89
10.02.1989 JP 31408/89
10.02.1989 JP 31409/89
10.02.1989 JP 31411/89
02.11.1989 JP 284879/89

(43) Date of publication of application:
**16.08.1990 Bulletin 1990/33**

(73) Proprietor: **CANON KABUSHIKI KAISHA
Tokyo (JP)**

(72) Inventors:
• **Yamada, Yasuhiro
Yokohama.shi, Kanagawa-ken (JP)**
• **Tanioka, Hiroshi
Yokohama-shi, Kanagawa-ken (JP)**

(74) Representative:
**Beresford, Keith Denis Lewis et al
BERESFORD & Co.
2-5 Warwick Court
High Holborn
London WC1R 5DJ (GB)**

(56) References cited:
**EP-A- 0 279 419          US-A- 4 622 595**

• **LINKS FOR THE FUTURE, IEEE
INTERNATIONAL CONFERENCE ON
COMMUNICATIONS, Amsterdam, 14th - 17th
May 1984, The Netherlands Proceedings, vol. 1,
pages 228-233; K. NAKAZATO et al.: "Halftoning
of continuous-tone image reproduction with
alias suppression"**
• **PATENT ABSTRACTS OF JAPAN, vol. 6, no. 194
(E-134), 2nd October 1982; & JP-A-57 104 369
(TOSHIBA CORP.) 29-06-1982**

**Description**

BACKGROUND OF THE INVENTION

Field of the Invention

The present invention relates to an image processing apparatus for digitizing image data to binary values or multi-levels and, more particularly, to an image processing apparatus for half-tone processing input image data.

Related Background Art

Hitherto, in image processing apparatuses such as facsimile apparatus, digital copying machine, and the like, an error diffusion method and an average density approximating method have been proposed as a half-tone processing system.

The former error diffusion method has been disclosed in the literature by R. Floyd & L. Steinberg, "AN ADAPTIVE ALGORITHM FOR SPATIAL GRAY SCALE", SID 75 DIGEST, pp 36 to 37. According to the error diffusion method, multi-level image data of a target pixel is binarized (converted into a highest density level or a lowest density level) and a difference between the binary level and the multi-value image data before the binarization is added with a predetermined weight and the resultant data is added to the data of the pixel near the target pixel.

The applicant of the present invention has already filed U.S. Patents 4 876 610, 4 878 125, 5 008 950, 5 157 741, 4 958 236, 5 325 448, 4 958 218, 4 975 786 and 4 958 238 as techniques for half-tone processing image data by the error diffusion method.

On the other hand, as disclosed in JP-A-57-104369, according to the latter average density approximating method, the target pixel is binarized to black or white by using the already binarized data of pixels near the target pixel. Two weighted average values using the respective pixels near the target pixel are obtained, the average of the two average values is set to a threshold value, and the image data of the target pixel is binarized on the basis of the threshold value.

Since the above error diffusion method is of the type in which the difference between the input image data and the output image data is corrected, the densities of the input image and the output image can be preserved, so that an image having excellent resolution and gradation can be provided.

However, in the error diffusion method, when the difference between the input image data and the output image data is corrected, many two-dimensional calculations must be executed, so that there is a drawback such that a hardware construction is very complicated because of a very large processing amount.

On the other hand, in the average density approximating method, since the calculations are performed by using the binary data after completion of the binarization, a hardware construction can be simplified and a high processing speed can be realized because of a very small processing amount.

However, in the average density approximating method, the target pixel is merely approximated to the average value of the region including the target pixel and is binarized. Therefore, there are drawbacks such that the number of gradations is limited, a texture of a low frequency which is peculiar to the image having a gentle density change occurs, and the picture quality deteriorates.

EP-A-0279419 proposes a binarization arrangement in which an average is calculated of input density values for an area around target pixel. A first threshold is obtained by adding a predetermined value to the average, and if the target pixel has a density which is greater than the first threshold it is binarized to "one". A second threshold value is calculated by subtracting a predetermined value from the average, and if the target pixel has a density value less than the second predetermined value it is binarized to "zero", and if the density of the target pixel is between the two threshold values, it is binarized using a "dither" process.

SUMMARY OF THE INVENTION

According to the present invention there is provided image processing apparatus as set out in claim 1 and an image processing method as set out in claim 19. The remaining claims set out optional features.

An embodiment of the present invention provides an image processing apparatus in which an image having excellent gradation and resolution can be obtained in a short time by a simple hardware construction.

BRIEF DESCRIPTION OF THE DRAWINGS

Figs. 1 and 14 are diagrams showing a multi-level image, a binary image, and a weighting mask of each pixel;

Figs. 2 and 15 are diagrams showing a difference which occurs upon binarization;

Figs. 3, 13, 17A, and 17B are diagrams showing examples of weighting masks;

Fig. 4 is a block diagram showing a construction of an image processing apparatus in an embodiment;

Fig. 5 is a block diagram showing the details of a binarizing circuit in the embodiment 1;

Fig. 6 is a diagram showing an example of a table stored in an ROM 12 in Fig. 5;

Fig. 7 is a diagram showing the case where a weighting mask 1 was converted into 6-bit data;

Figs. 8, 9, and 10 are block diagrams of binarizing circuits of embodiments in the case where the binarizing circuit of Fig. 5 is partially modified;

Fig. 11 is a diagram showing an example of a table stored in an ROM 100 in Fig. 10;

Fig. 12 is a diagram for explaining the embodiment 4;

Figs. 16 and 18 are block diagrams showing the details of the binarizing circuit in the embodiment 7;

Fig. 19 is a block diagram showing a binarizing circuit of the embodiment 8;

Fig. 20 is a diagram for explaining the embodiment 9; and

Fig. 21 is a block diagram showing binarizing circuits in the embodiments 9 and 10.

DETAILED DESCRIPTION OF THE PREFERRED EMBODIMENTS

Embodiments of the present invention will be described in detail hereinbelow with reference to the drawings.

Embodiment 1

The principle of the present system will be first described.

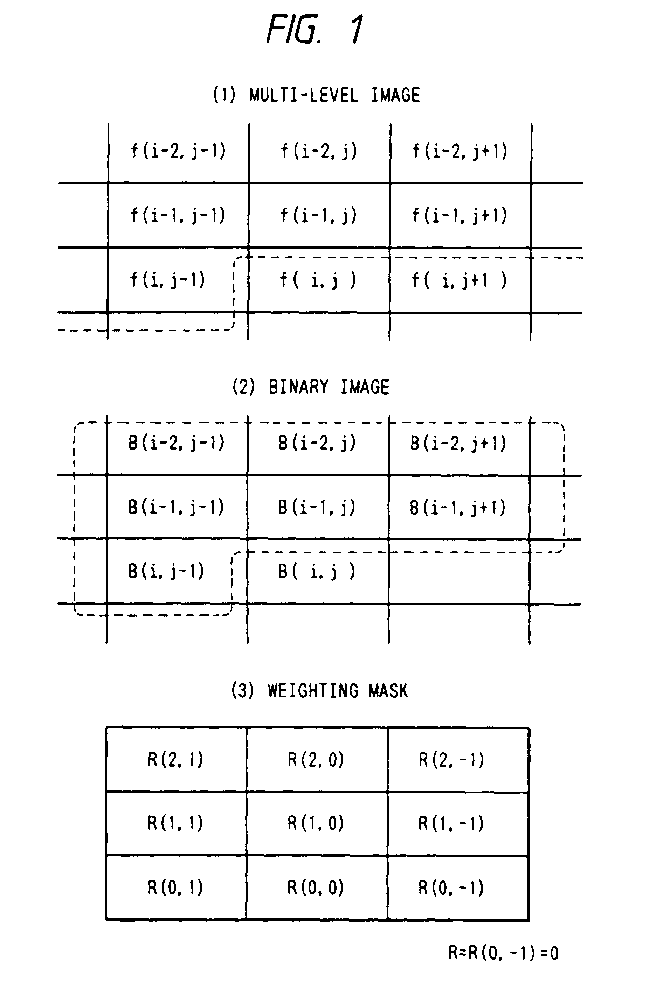

Fig. 1(1) is a diagram showing multi-level data of each pixel of an input image.
In Fig. 1(1), $f(i, j)$ denotes multi-level density data of an input image at the position of a target pixel to be binarized and is set to a normalized value of 0 to 1. On the other hand, the binarizing process has already been finished at pixel positions above a broken line. After the target pixel was binarized, the similar processes are sequentially executed such that $f(i, j+1)$, $f(i, j+2)$, ....
Fig. 1(2) is a diagram showing binary image data. $B(i, j)$ denotes a density (having a value of 0 or 1) after the target pixel was binarized. The portion surrounded by a broken line relates to the pixel data which has already been binarized when the target pixel is processed. Those binarized pixel data are used when the target pixel is binarized.
Fig. 1(3) is a diagram showing weighting masks. R denotes an example of a weighting mask to obtain an average density and is expressed by a matrix of a size of 3 x 3. The weight at the position corresponding to the target pixel is set to $R(0, 0)$, and $R(0, -1)$ is 0.
According to the system, the average densities of the output images near the target pixel are set to $m_1(i,j)$ and $m_0(i,j)$ on the assumptions that the target pixel is binarized into black or into white respectively, and are obtained by the following equation.

$$m_1(i, j) = \frac{1}{S} \sum_{x=0}^{2} \sum_{y=-1}^{1} R(x, y) \cdot B(i-x, j-y) \quad \cdots \textcircled{1}$$

(where, this equation relates to the case where $B(i, j) = 1$, that is, the target pixel is binarized to black)

$$m_0(i, j) = \frac{1}{S} \sum_{x=0}^{2} \sum_{y=-1}^{1} R(x, y) \cdot B(i-x, j-y) \quad \cdots \textcircled{2}$$

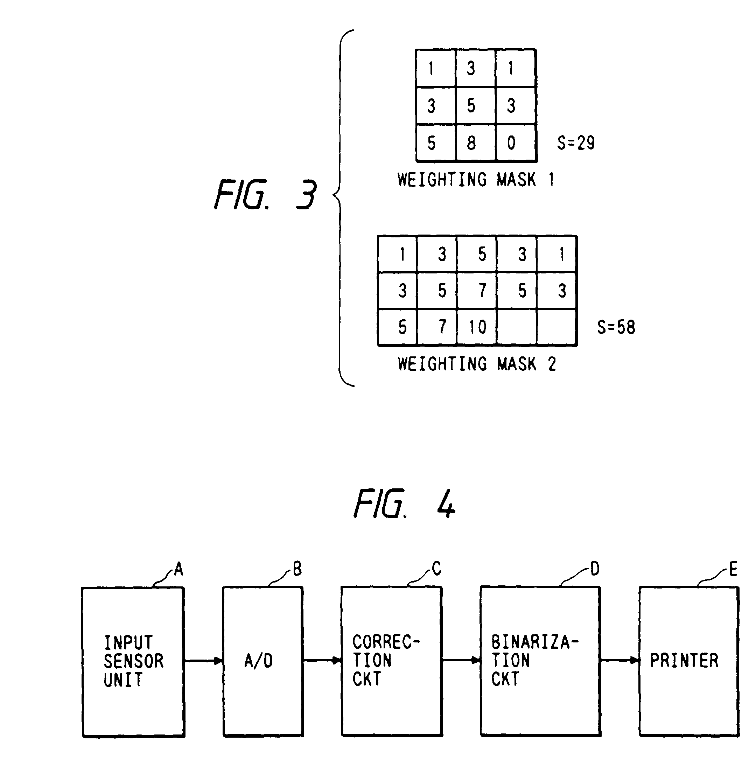

(where, this equation relates to the case where $B(i, j) = 0$, that is, the target pixel is binarized to white)
S denotes the sum of weights R. For instance, in the case of using the weighting mask 1 in Fig. 3, S = 29. In the case of using the weighting mask 2, S = 58.

The multi-level density $f(i,j)$ of the target pixel is binarized by using the average densities $m_1$ and $m_0$ according to the following equations.

$$\text{When } f(i,j) + E(i,j) > (m_1(i,j) + m_0(i,j))/2,$$

$$B(i,j) = 1,$$

$$E(i,j+1) = f(i,j) + E(i,j) - m_1(i,j)$$

$$\text{When } f(i,j) + E(i,j) \leq (m_1(i,j) + m_0(i,j))/2,$$

$$B(i,j) = 0,$$

$$E(i,j+1) = f(i,j) + E(i,j) - m_0(i,j)$$

$$(3)$$

In the equation ③, $E(i,j)$ denotes a difference which occurs when a multi-level density $f(i,j-1)$ of the pixel $(i,j-1)$ which precedes the target pixel $(i,j)$ by one pixel was binarized to a binary density $B(i,j-1)$. That is, the process such that the input pixel density $f(i,j-1)$ was binarized to 1 or 0 means that the pixel $(i,j-1)$ was approximated to either $m_1(i,j-1)$ or $m_0(i,j-1)$ as an average density near the pixel $(i,j-1)$. In each case, the difference of $f(i,j-1) - m_1$ or $f(i,j-1) - m_0$ occurs with the multi-level density $f(i,j-1)$ of the input image. Therefore, the corrected value, after adding the binarisation difference $E(i,j)$ to the target pixel $f(i,j)$, is binarized, so that density on the image after completion of the binarization can be completely preserved with respect to the whole input image region. The present system has the useful feature that the processes with respect to a point are executed in consideration of such a binarization difference. As compared with the above average density approximating method, the half-tone reproducing capability is remarkably improved.

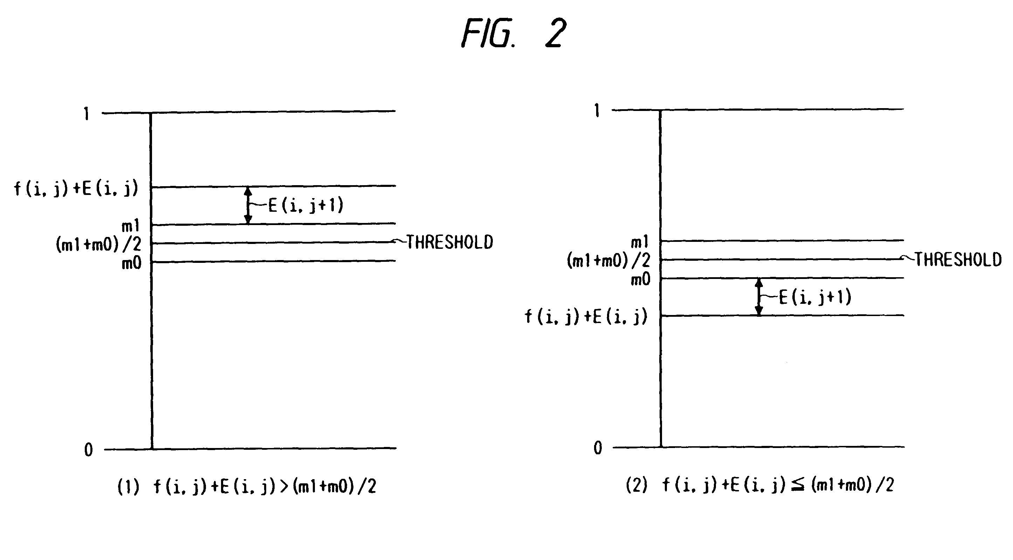

In the equation ③, $E(i, j+1)$ denotes a difference which is distributed to the pixel $(i, j+1)$ which is subsequent to the target pixel $(i,j)$ by one pixel. As shown in Fig. 2, $E(i,j+1)$ is set to a value which is obtained by subtracting $m_1$ from $f(i,j) + E(i,j)$ in the case where $f(i,j) + E(i,j) > (m_1 + m_0)/2$. $E(i,j+1)$ is set to a value which is obtained by subtracting $m_0$ from $f(i,j) + E(i,j)$ in the case where $f(i,j) + E(i,j)) \leq (m_1 + m_0)/2$.

As mentioned above, in spite of the fact that a processing amount in the case of the average density preserving method in the embodiment is much smaller than that in the error diffusion method, an image reproducing capability which is equal to or higher than that in the error diffusion method can be obtained, because in spite of the fact that the difference is merely corrected by using one pixel adjacent to the target pixel, an effect similar to that in the case of correcting by distributing the differences to a plurality of pixels is equivalently obtained by obtaining the average densities by using a plurality of data after completion of the binarization.

In terms of this point, it will be obviously understood that the above average density approximating method does not consider the differences as in the present system and the image reproducing capability of the present system is fairly better than that of the average density approximating method.

Fig. 4 is a block diagram of an image processing apparatus showing an embodiment of the invention. An input sensor unit A comprises a photoelectric converting element such as a CCD or the like and a drive apparatus for scanning the photoelectric converting element. The input sensor unit A reads and scans an original. The image data of the original which was read by the input sensor unit A is successively transmitted to an A/D converter B. The A/D converter B converts the data of each pixel into 6-bit digital data, thereby digitizing into the data having the gradations of 64 levels. Next, a shading correction and the like to correct a sensitivity variation of the CCD sensor and an illuminance variation by an illuminating light source are executed by digital calculating processes in a correction circuit C. Next, the corrected data is sent to a binarization circuit D. In the binarization circuit D, the 6-bit multi-level image data which was input is digitized into the 1-bit binary data by the foregoing system. A printer E is constructed by a laser beam system or an ink jet system. On the basis of the binary data sent from the binarization circuit D, the printer E on/off controls the dots and reproduces an image onto a recording paper.

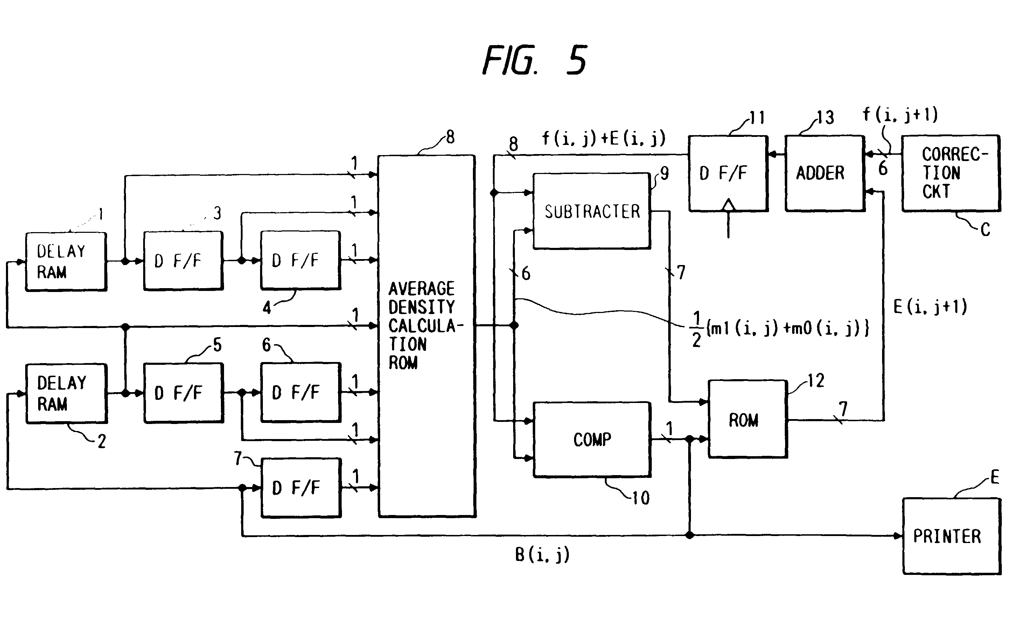

Fig. 5 is a block diagram showing the details of the binarizing circuit D in Fig. 4.

In Fig. 5, reference numerals 1 and 2 denote delay RAMs each for storing the binary data which was binarized by an amount of one line; 3 to 7 and 11 indicate D F/F (D flip-flops) each for delaying the binary data by one pixel; 8 an average density calculation ROM for calculating an average density of the pixels around the target pixel and outputting a threshold value; 9 a subtracter for calculating the difference between the multi-level data of the target pixel which was input and the threshold value; 10 a comparator for comparing the threshold value which is output from the ROM 8 with the multi-level data of the target pixel; 11 the D F/F; 12 an ROM for calculating difference data to be added to the multi-level data which is input subsequently to the target pixel; and 13 an adder for adding the input data and the difference data which is output from the ROM 12.

In the above construction, the comparator 10 outputs data $B(i,j)$ of one-bit which was binarized on the basis of the

equation③to the D F/F 7 and the printer E. The binary data is input to the RAMs 2 and 1 for delaying every line. The binary data B(i-1,j+1) which was delayed by one line by the RAM 2 and the binary data B(i-2,j+1) which was delayed by two lines by the RAM 1 are output to the ROM 8.

Further, the D F/F 3 outputs the binary data B(i-2,j) to the ROM 8; the D F/F 4 outputs the B(i-2, j-1); the D F/F 5 outputs the B(i-1,j); D F/F 6 outputs the B(i-1,j-1); and the D F/F 7 outputs the B(i,j-1), respectively, to the ROM 8.

As shown in Fig. 1, the binary data relates to binary images of the peripheral pixel for the input image $f(i,j)$. If the binary images are connected to input addresses in the ROM 8, the binary threshold value can be obtained at a high speed because the binary threshold value $(m_1(i,j) + m_0(i,j))/2$ shown in the equation③has previously been stored in the ROM 8 on the basis of the equations①and②.

The binary threshold value is input to the subtracter 9 and comparator 10. On the other hand, $f(i,j) + E(i,j)$ is input from the D F/F 11 to the subtracter 9 and comparator 10.

On the basis of those two inputs, the subtracter 9 calculates the difference

$$f(i,j) + E(i,j) - (m_1(i,j) + m_0(i,j))/2$$

between both sides of the inequality in the equation③. The difference value is input to the ROM 12. When the above equation is modified by using the equations①to③we have

$$f(i,j) + E(i,j) - [m_1(i,j) - \frac{1}{2S}R(0,0)]$$

$$= f(i,j) + E(i,j) - [m_0(i,j) + \frac{1}{2S}R(0,0)]$$

$$= \begin{cases} E(i,j+1) + \frac{1}{2S}R(0,0) & (\text{when} \quad B(i,j)=1) \\ \\ E(i,j+1) - \frac{1}{2S}R(0,0) & (\text{when} \quad B(i,j) = 0) \end{cases} \quad ④$$

On the other hand, on the basis of the above two inputs, the comparator 10 compares $f(i,j) + E(i,j)$ and $(m_1(i,j) + m_0(i,j))/2$ and outputs the binary data B(i,j).

Then, in the ROM 12, the E(i,j+1) shown in the equation④is calculated on the basis of the value of B(i,j) from the comparator 10 and $f(i,j) + E(i,j) - (m_1(i,j) + m_0(i,j))/2$ from the subtracter 9.

In the above equation④, since the weight $R(0,0)$ and S have already been known, by previously calculating the difference E(i,j+1) from the average density value and storing into the difference calculation ROM 12, if the binary data B(i,j) and

$$f(i,j) + E(i,j) - (m_1(i,j) + m_0(i,j))/2$$

as the output of the subtracter 9 are input to the ROM 12, E(i,j+1) can be obtained by the table conversion.

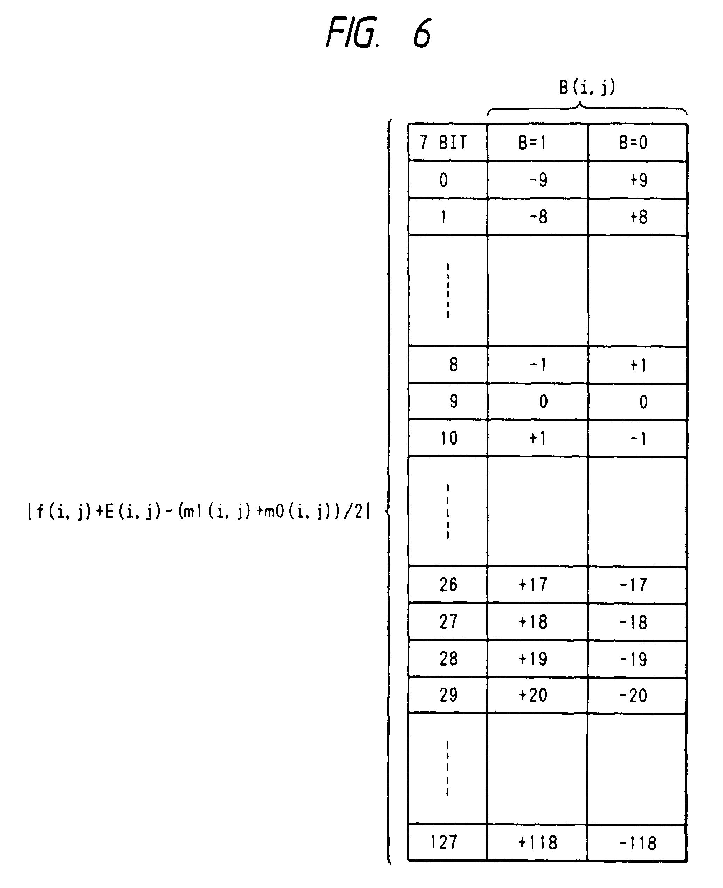

Fig. 6 shows an example of the table stored in the ROM 12.

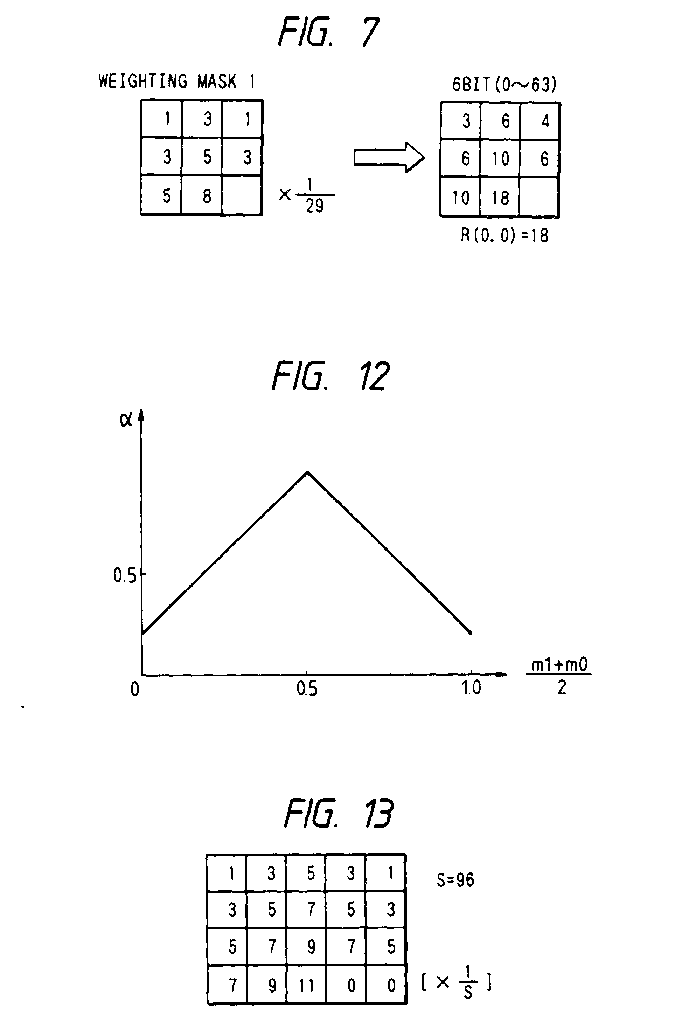

In the embodiment, since the weight mask 1 shown in Fig. 3 has been used, in order to normalize to the 6-bit image density levels (0 to 63) which are actually input, the values obtained by the equations①and②are increased by 63 times and the resultant value is stored as the value which was converted into the 6-bit value into the average density calculation ROM table. In this case, the weight mask 1 is set as shown in Fig. 7.

The output

$$f(i,j) + E(i,j) - (m_1(i,j) + m_0(i,j))/2$$

of the subtracter 9 is input as an absolute value into the ROM 12 and the positive/negative sign is determined in accordance with the value of B(i,j). The difference E(i,j+1) obtained by the ROM 12 is added to the input image data f(i,j+1) by the adder 13. The D F/F 11 delays the addition value by a period of time of the data of one clock.

As mentioned above, the embodiment can be easily realized by merely adding calculation ICs of a few chips as compared with the average density approximating method. Moreover, the gradations can be extremely improved.

As mentioned above, according to the above first embodiment, the average density is calculated on the basis of the binary data and the binarization is executed on the basis of the average density. Thus, a processing amount for binarization can be fairly reduced. In addition, the gradations can be remarkably improved by correcting the difference between the average density which is generated upon binarization and the input multi-level data.

In the embodiment, the binarization difference E has been distributed to only the next pixel and corrected in the equation③. However, if the binarization difference E is distributed to a plurality of pixels in a manner such that 3E(i,j+1)/4 is distributed to the pixel (i,j+1) and E(i,j+1)/4 is distributed to the pixel (i,j+2) in Fig. 1, even if the average processing mask is small, the gradation reproducing capability is improved.

The difference E can be also two-dimensionally distributed to a plurality of pixels near the target pixel at a predetermined distribution ratio. In this case, although a hardware construction is slightly complicated, the uniform image can be also obtained with respect to the sub scanning direction as well as in the main scanning direction and the reproducibility is improved.

In the case of two-dimensionally distributing the difference E in two directions (one adjacent pixel and one pixel existing under the target pixel by one line), the equation ③ is as follows.

$$\text{When } f(i,j) + E(i,j) > \{m_1(i,j) + m_0(i,j)\}/2$$

$$B(i,j) = 1$$

$$E_1(i,j+1) = \frac{1}{2}[f(i,j) + E(i,j) - m_1(i,j)]$$

$$E_2(i+1,j) = \frac{1}{2}[f(i,j) + E(i,j) - m_1(i,j)]$$

$$\text{When } f(i,j) + E(i,j) \leqq \{m_1(i,j) + m_0(i,j)\}/2 \qquad ③'$$

$$B(i,j) = 0$$

$$E_1(i,j+1) = \frac{1}{2}[f(i,j) + E(i,j) - m_0(i,j)]$$

$$E_2(i+1,j) = \frac{1}{2}[f(i,j) + E(i,j) - m_0(i,j)]$$

$$\text{where, } E(i,j) = E_1(i,j) + E_2(i,j)$$

The difference transfer pixels are set to two pixel positions which are neighboring to the target pixel in two orthogonal directions, that is, two points of (i,j+1) and (i+1,j). The difference value $[f(i,j) + E(i,j) - m(i,j)]$ which is obtained in the embodiment is divided into two values of $E_1(i,j+1)$ and $E_2(i+1,j)$ and they are respectively added to the input density value, thereby executing the correction.

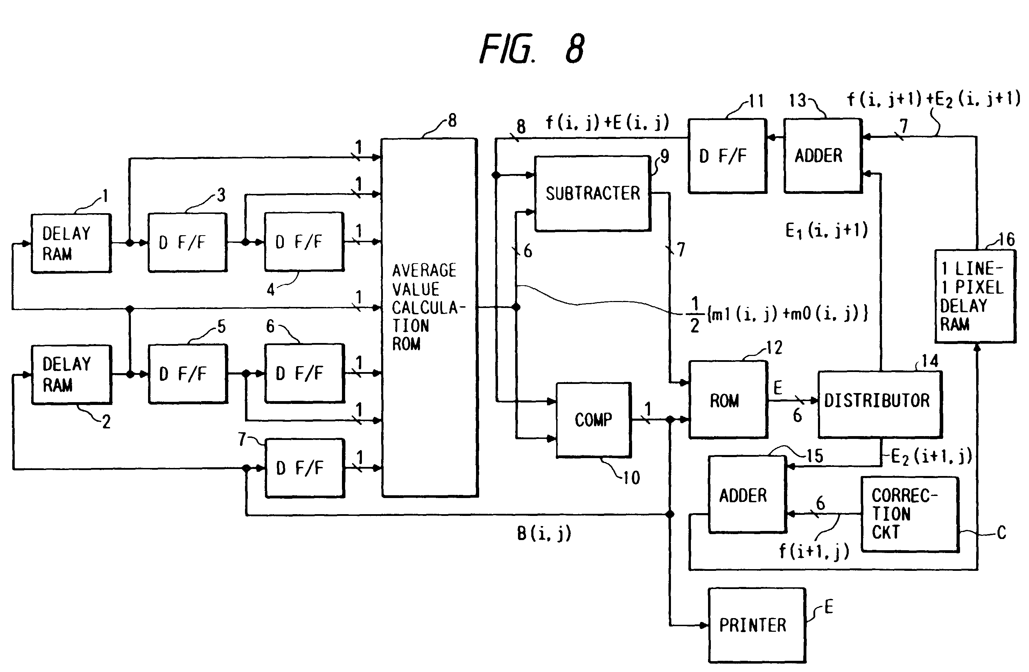

Fig. 8 is a block diagram of a binarizing circuit in the case of two-dimensionally distributing the binarization difference E. In Fig. 8, the same parts and elements as those in Fig. 5 are designated by the same reference numerals and their descriptions are omitted.

Reference numeral 14 denotes a distributor for distributing the difference E which was sent from the ROM 12 into the half portions in order to distribute them to the f(i,j+1) pixel and f(i+1,j) pixel.

Reference numeral 15 indicates an adder for adding f(i+1,j) sent from the correction circuit C and $E_2(i+1,j)$ sent from the distributor 14.

Reference numeral 16 represents an RAM for delaying the data sent from the adder 15 by a period of time corresponding to one line minus one pixel. By providing the RAM 16, the difference generated at the previous line can be added to the target pixel f(i,j).

As mentioned above, by two-dimensionally distributing the difference between the average density which is generated upon binarization and the input density, the uniformity can be increased as compared with the case of distributing the difference to one adjacent pixel and the generation of a periodic pattern can be prevented. On the other hand, even when an edge portion of a character, a diagram, or the like is reproduced, the directivity does not appear and the edge portion can be clearly reproduced.

In the above embodiment, the weighting mask 1 shown in Fig. 3 has been used as a weighting mask to obtain the average density. However, by enlarging a region to obtain the average density like a weighting mask 2, the reproducibility of the gradations can be also further improved and the reproducibility of the resolution information which is required in a character original or the like is also improved. The weighting mask is not limited to the above masks, but any mask of a similar form can be also used.

On the other hand, although the weighting mask has weights which increase as the pixel to be processed approaches the target pixel, its gradient and distribution are not limited. Pixels at spaced apart positions which are not adjacent can be also used.

In the embodiment, when the difference which is distributed to peripheral pixels is obtained by the error diffusion method, the inevitable dividing process is unnecessary. The difference generated in such a case is eliminated and the densities of the input image and output image can be completely preserved.

Embodiment 2

In the embodiment 1, the difference $E(i,j)$, which is generated when the previous pixel $(i,j-1)$ of the target pixel $(i, j)$ is binarized, is added to $f(i,j)$ of the target pixel. This creates the corrected value which is compared with the average density, thereby executing the binarization. However, in the embodiment 2, the difference $E(i,j)$ is incorporated in the calculation of the average value when the target pixel is binarized, thereby executing the binarization.

That is, in the embodiment 2, $m_1(i,j)$ and $m_0(i,j)$, obtained by the equations ① and ② in the embodiment 1, are set as follows.

$$m_1{}'(i,j) = \frac{1}{S} \sum_{x=0}^{2} \sum_{y=-1}^{1} R(x,y) \cdot B(i-x,j-y) - E(i,j)$$

$$(\text{where, } B(i,j) = 1) \quad \cdots \quad ⑤$$

$$m_0{}'(i,j) = \frac{1}{S} \sum_{x=0}^{2} \sum_{y=-1}^{1} R(x,y) \cdot B(i-x,j-y) - E(i,j)$$

$$(\text{where, } B(i,j) = 0) \quad \cdots \quad ⑥$$

The multi-level density $f(i,j)$ of the target pixel is binarized by the following equations.

$$\left. \begin{array}{l} \text{When } f(i,j) > (m_1{}'(i,j) + m_0{}'(i,j))/2, \\[4pt] \qquad B(i,j) = 1, \\[4pt] \qquad E(i,j+1) = f(i,j) + E(i,j) - m_1{}'(i,j) \\[4pt] \text{When } f(i,j) \leq (m_1{}'(i,j) + m_0{}'(i,j))/2 \\[4pt] \qquad B(i,j) = 0, \\[4pt] \qquad E(i,j+1) = f(i,j) + E(i,j) - m_0{}'(i,j) \end{array} \right\} \quad ⑦$$

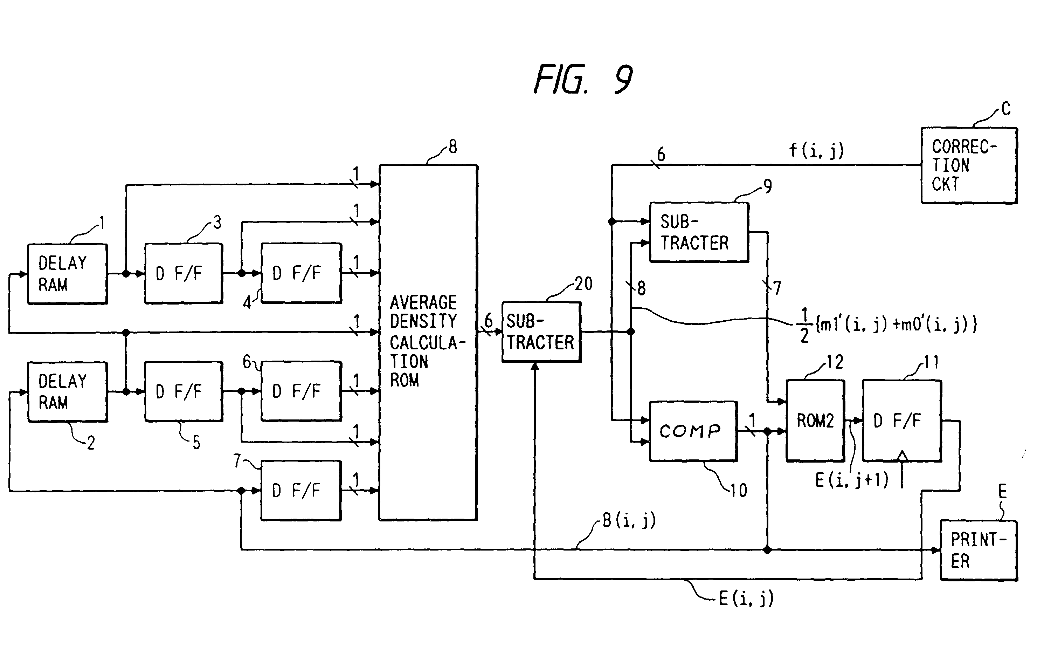

Fig. 9 is a block diagram of an image processing apparatus which realizes the embodiment 2.

In Fig. 9, reference numerals 1 to 12 indicate the same component elements as those in the embodiment 1 and their descriptions are omitted. Reference numeral 20 denotes a subtracter to subtract the difference $E(i,j)$ generated at the previous pixel from the average density value sent from the average density calculation ROM 8. In the above construction, the threshold value $(m_1{}'(i,j) + m_0{}'(i,j))/2$ is obtained by combining the difference $E$ in the subtracter 20 with the average density which was output from the ROM 8, and is input to the subtracter 9 and comparator 10. On the other hand, the multi-level data $f(i,j)$ of the input image is input to the subtracter 9 and comparator 10.

On the basis of those two inputs, the subtracter 9 calculates the difference

$$f(i,j) - (m_1{}'(i,j) + m_0{}'(i,j))/2$$

between both sides of the inequality in the equation ⑦. When the above equation is modified by using the equations ⑤ and ⑥, we have

$$f(i,j) - [m_1'(i,j) - \frac{1}{2S} R(0,0)]$$

$$= f(i,j) - [m_0'(i,j) + \frac{1}{2S} R(0,0)]$$

$$= \begin{cases} E(i,j+1) + \frac{1}{2S} R(0,0) & (\text{when } B(i,j) = 1) \\ \\ E(i,j+1) - \frac{1}{2S} R(0,0) & (\text{when } B(i,j) = 0) \end{cases} \quad (8)$$

On the other hand, the comparator 10 compares $f(i,j)$ with $(m_1'(i,j) + m_0'(i,j))/2$ and outputs the binary data $B(i,j)$.

In the above equation (8), since the weight $R(0, 0)$ and S have already been known, the binarization difference $E(i,j+1)$ is derived by the ROM 12. The difference $E(i,j+1)$ is delayed by the D F/F 11 and is input to the subtracter 20. By repeating the above processes, the input multi-level data can be sequentially binarized. Although the embodiments 1 and 2 have been described with respect to the example in which the input multi-level data is digitized into the binary data, the invention can be also applied in the case of digitizing into 3-value data or 4-value data.

Although the embodiments have been described with respect to the case where the number of kinds of the input data is set to one (one color), by setting the input data to three colors of R, G, and B, the invention can be also applied to a color image.

Embodiment 3

A modified example of the embodiment 1 will now be described as an embodiment 3.

In the embodiment 3, the difference $E(i,j+1)$ is calculated in a manner such that $E(i,j+1) = f(i,j) + E(i,j) - m_0(i,j)$ only when the corrected data $(f(i,j) + E(i,j))$ as described in the embodiment 1 (Fig. 2) lies within a predetermined range. That is, the difference $E(i,j+1)$ upon binarization of the next pixel is

$$\left. \begin{array}{l} f(i,j) + E(i,j) - m_0(i,j) < \alpha \times R(0,0) \\ \qquad\qquad (\alpha \text{ is a constant}) \\ \text{or} \\ f(i,j) + E(i,j) - m_1(i,j) > \alpha \times R(0,0) \\ \qquad\qquad (\alpha \text{ is a constant}) \\ E(i,j+1) = 0 \text{ is set.} \end{array} \right\} \quad (9)$$

In the cases other than the above case,

$$\left. \begin{array}{l} E(i,j+1) = f(i,j) + E(i,j) - m_1(i,j) \\ \qquad\qquad (\text{when } B(i,j) = 1) \\ \text{or} \\ E(i,j+1) = f(i,j) + E(i,j) - m_0(i,j) \\ \qquad\qquad (\text{when } B(i,j) = 0) \end{array} \right\} \quad (10)$$

That is, the characteristic processes of the present system are as follows. As shown in the equations (9) and (10), in the comparison of the target pixel correction values and the average values $m_1$ and $m_0$ upon binarization, if the target pixel correction value lies within a predetermined (according to the value of $\alpha$) region (namely, the difference $E(i,j+1)$ lies within a predetermined region) in which it has a value near the selected average value $m_1$ or $m_0$, the difference

between the selected average value and the target pixel correction value is assigned as the correction value upon binarization of the next pixel in accordance with the equation ⑩ . On the other hand, when such a difference is out of the predetermined region, that is, when the difference between the target pixel correction values $m_1$ and $m_0$ is sufficiently large, the correction value is set to 0 and the correction upon binarization of the next pixel is not executed.

In other words, in the former case, the density change of the image near the target pixel is small, so that it is determined such that the image relates to the image area having a half tone. Therefore, the difference between the image density and the average density value generated by binarizing is corrected by the next pixel, thereby enabling the gentle density change of the image to be false half-tone processed with a high fidelity. Namely, the gradations can be improved. On the other hand, in the latter case, it is determined that there is the edge portion of a character, a diagram, or the like, namely, the target pixel density suddenly changes as compared with the density of the image near the target pixel. Therefore, the correction value is set to 0 for the pixel in such a case and the deterioration in resolution due to the preservation of the density is suppressed.

Due to this, the resolution in the edge portion can be improved.

As mentioned above, according to the characteristic processing system of the third embodiment, in the half-tone image region, the density is preserved in the binary image by using the binarization difference in accordance with the image density change and in a high contrast image portion of a character or the like, in order to prevent the blurring of the image due to the preservation of the density, the binarization difference is not used.

Since the schematic circuit construction of the embodiment 3 is similar to that shown in Fig. 4, its description is omitted.

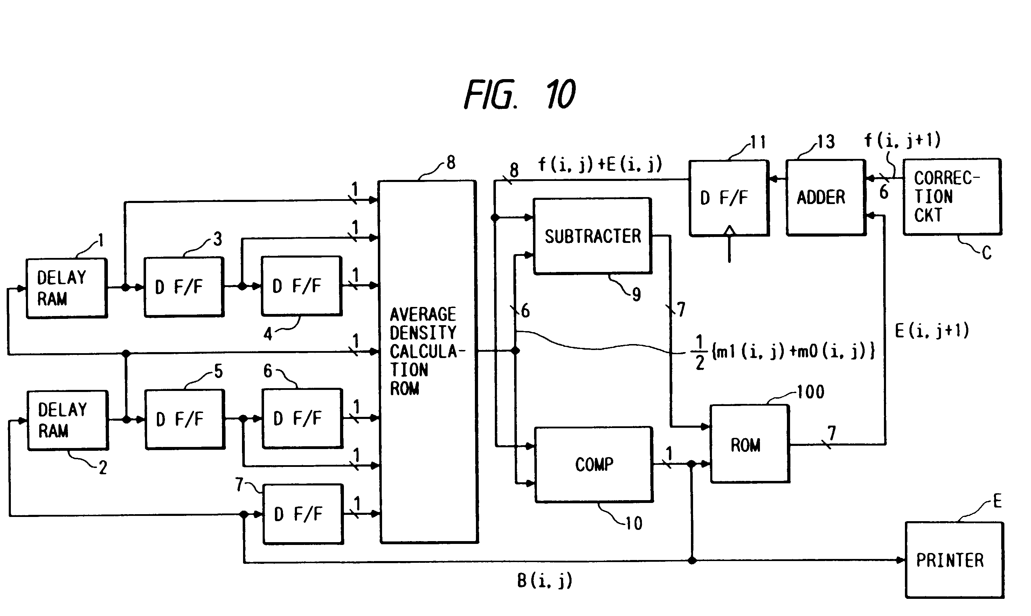

Fig. 10 is a block diagram showing the details of the binarizing circuit D in the embodiment 3.

In the diagram, the same parts and components as those in Fig. 5 are designated by the same reference numerals.

In Fig. 10, reference numerals 1 and 2 denote the delay RAMs each for storing the binarized binary data by an amount corresponding to one line; 3 to 7 and 11 indicate the D F/F (D flip-flops) each for delaying the binary data by a period of time corresponding to one line; 8 the average density calculation ROM for calculating the average densities of the pixels around a target pixel and for outputting a threshold value; 9 a subtracter for calculating the difference between the input multi-level data of the target pixel and the threshold value; 10 the comparator for comparing the threshold value which is output from the ROM 8 with the multi-level data of the target pixel; 11 the D F/F; 100 an ROM for calculating difference data to be added to the multi-level data which is input next to the target pixel; and 13 the adder for adding the input data and the difference data which is output from the ROM 100.

In the above construction, the comparator 10 outputs the data B(i,j) of one-bit which was binarized on the basis of the equation③to the D F/F 7 and the printer E. The binary data is input to the RAMs 2 and 1 each for delaying every line. The binary data B(i-1, j+1) which was delayed by one line by the RAM 2 is output to the ROM 8. The binary data B(i-2, j+1) which was delayed by two lines by the RAM 1 is output to the ROM 8.

Further, the D F/F 3 outputs the B(i-2,j), the D F/F 4 outputs the B(i-2,j-1), the D F/F 5 outputs the B(i-1,j), the D F/F 6 outputs the B(i-1,j-1), and the D F/F 7 outputs the B(i,j-1), respectively, to the ROM 8.

As shown in Fig. 1, the binary data relates to the binary images of the peripheral pixels for the input image f(i,j). If the binary images are connected to input addresses in the ROM 8, the binary threshold value can be obtained at a high speed because the binary threshold value $(m_1(i,j) + m_0(i,j))/2$ shown in the equation③has previously been stored in the ROM 8 on the basis of the equations①and②

The threshold value is input to the subtracter 9 and comparator 10. On the other hand, f(i,j) + E(i,j) is input from the D F/F 11 to the subtracter 9 and comparator 10.

On the basis of those two inputs, the subtracter 9 calculates the difference

$$f(i,j) + E(i,j) - (m_1(i,j) + m_0(i,j))/2$$

between both sides of the inequality in the equation③ When the above equation is modified by using the equations ①and② we have

$$f(i,j) + E(i,j) - [m_1(i,j) - \frac{1}{2S} R(0,0)]$$

$$= f(i,j) + E(i,j) - [m_0(i,j) + \frac{1}{2S} R(0,0)]$$

$$= \begin{cases} E(i,j+1) + \frac{1}{2S} R(0,0) & (\text{when } B(i,j) = 1) \\ \\ E(i,j+1) - \frac{1}{2S} R(0,0) & (\text{when } B(i,j) = 0) \end{cases} \quad \textcircled{11}$$

On the other hand, on the basis of the above two inputs, the comparator 10 compares $f(i,j) + E(i,j)$ and $(m_1(i,j) + m_0(i,j))/2$ and outputs the binary data $B(i,j)$.

Then, in the ROM 100, the $E(i,j+1)$ shown in the equation ⑨ or ⑩ is calculated on the basis of the value of $B(i,j)$ from the comparator 10 and $f(i,j) + E(i,j) - (m_1(i,j) + M_0(i,j))/2$ from the subtracter 9.

In the equation ⑪, since the weight $R(0,0)$ and $S$ have already been known, the difference $E(i,j+1)$ according to the equations ④ and ⑤ is previously calculated and stored into the difference calculation ROM 100. Due to this, the E $(i,j+1)$ is obtained by the table conversion by inputting the binary data $B(i,j)$ and

$$f(i,j) + E(i,j) - (m_1(i,j) + m_0(i,j))/2$$

as an output of the subtracter 9 into the ROM 12.

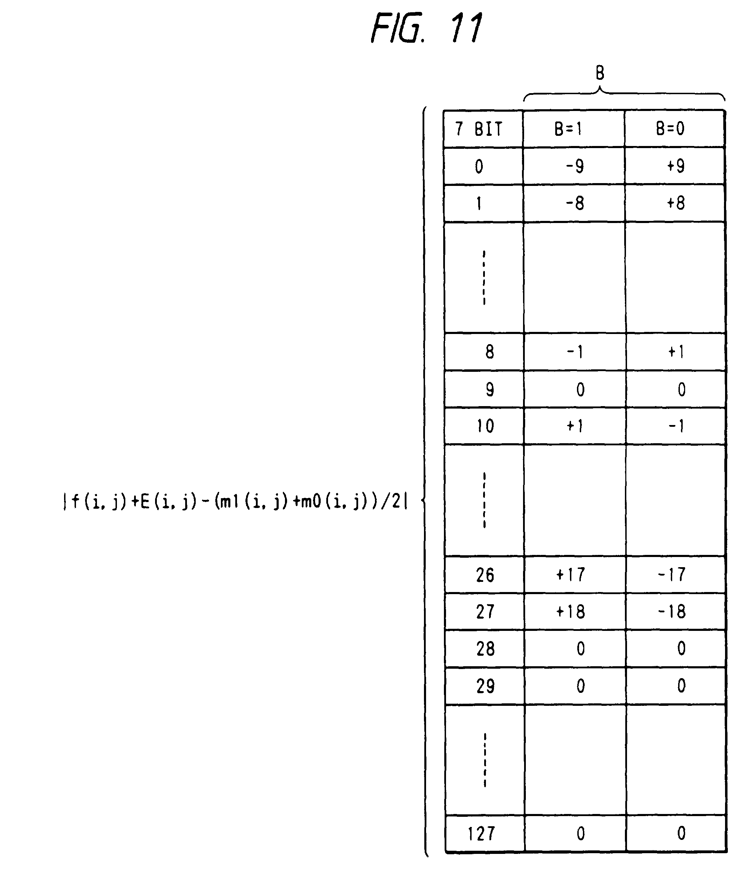

Fig. 11 shows an example of the table stored in the ROM 100.

In the embodiment, the weight mask 1 shown in Fig. 3 has been used. Therefore, in order to normalize to the image density levels (0 to 63) of six bits which are actually input, the value obtained by the equations ① and ② is increased by 63 times and the resultant values are stored into the average density calculation ROM table as the values which were converted into 6-bit values. In this case, the weight mask 1 is set as shown in Fig. 7.

Fig. 11 shows the table in the case where $\alpha = 1$ in the equation ⑥. When $E(i,j+1)$ is larger than $R(0,0) = 18$, E(i, j+1) is set to 0.

The output $f(i,j) + E(i,j) - (m_1(i,j) + m_0(i,j))/2$ of the subtracter 9 is input as an absolute value into the ROM 100. The positive/negative sign is determined in accordance with the value of $B(i,j)$.

The difference $E(i,j+1)$ obtained in the ROM 100 is added to the input image data $f(i,j+1)$ by the adder 13. The D F/F 11 delays the addition value by a period of time of one clock of the data.

As mentioned above, as compared with the average density approximating method, the embodiment 3 can be easily realized by merely adding calculation ICs of a few chips.

As described above, according to the embodiment 3 of the invention, the average density is calculated on the basis of the data which has already been binarized and the binarization is executed on the basis of the average density, so that a processing amount for binarization can be remarkably reduced. Moreover, when the difference between the average density which is generated upon binarization and the input multi-level data lies within a predetermined range, the difference is corrected, so that the half-tone process having the excellent gradations can be executed.

Further, in the embodiment, when the difference between the average density and the input multi-level data is larger than the predetermined value, the difference is not corrected. Thus, the deterioration in resolution due to the preservation of the densities is prevented and the edge portion can be clearly reproduced.

In the embodiment, the binarization difference E has been distributed to only the next pixel and the correction has been executed in the equation ③. However, the binarization difference E can be also two-dimensionally distributed to a plurality of pixels near the target pixel at a predetermined distribution ratio. In this case, although a hardware construction is slightly complicated, the uniform image can be also obtained with respect to the sub scanning direction as well as the main scanning direction and the reproducibility is improved.

For instance, in Fig. 1, if the difference E is distributed to a plurality of pixels in a manner such that $3E(i,j+1)/4$ is distributed to the pixel $(i,j+1)$ and $E(i,j+1)/4$ is distributed to the pixel $(i,j+2)$, the reproducing capability of the gradations is improved even if the average processing mask is small.

On the other hand, although the weighting mask has weights which increase as the pixel approaches the target pixel, its gradient and distribution are not limited. The pixels at spaced apart positions which are not adjacent can be also used.

The invention can be widely used in image processing apparatuses such as facsimile apparatus, copying machine, and the like.

Embodiment 4

In the embodiment 3, the binarization difference E has been divided into the cases shown by the equations ⑨ and ⑩ so that when the difference E is equal to or larger than a predetermined value set using the constant $\alpha$, the difference E is set to 0 and is not distributed to the next pixel. However, the value of the constant $\alpha$ can be also changed in accordance with the average density value or target pixel density value.

For instance, as shown in Fig. 12, if the value of $\alpha$ is set so as to decrease as the average density approaches 0 or 1, the edge portion of a black character in the white background, a blank character in the black background, or the like can be more finely binarized.

Embodiment 5

The following equation ⑫ is used in place of the equation ⑨ in the embodiment 3.
In the case where

$$
\left.
\begin{array}{l}
(m_1(i,j) + m_0(i,j))/2 \; < \; K, \; \text{and} \\[6pt]
m_1(i,j) \; < \; f(i,j) + E(i,j) \\[24pt]
(m_1(i,j) + m_0(i,j))/2 \; > \; 1-K, \; \text{and} \\[6pt]
m_0(i,j) \; > \; f(i,j) + E(i,j)
\end{array}
\right\} \qquad ⑫
$$

Where, K is a constant and if it is set to about 0 or 1 (K = 0, 1), the good result can be obtained.

According to the embodiment 5, by setting the difference E to 0 in the case where the average density value approached 0 or 1, the character portion can be highly finely binarized in a manner similar to the embodiment 2.

In the embodiments 4 and 5, as shown in Fig. 10, if the output $(m_1(i,j) + m_0(i,j))/2$ of the average density calculation ROM 8 is input in place of the binary data B(i,j) to an address terminal of the difference calculation ROM 100, those embodiments can be easily realized by the table converting processes based on the data which has previously been written in a manner similar to the embodiment 3.

Embodiment 6

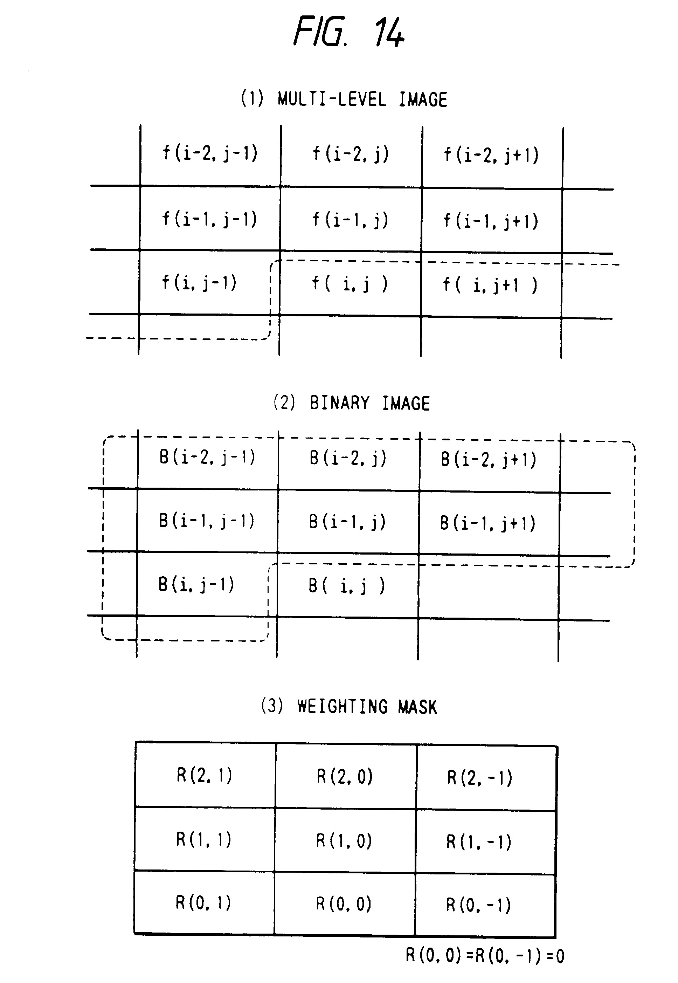

In the embodiment 3, the weighting mask of the matrix of 3 x 3 shown in Fig. 3 has been used. However, generally, in order to smoothly binarize the half-tone portion, it is desirable to set the weight R(0,0) of the target pixel to a small value. In addition, if the weight R(0,0) is small for a density change of the data to be binarized, the edge portion shown by the equation ⑨ can be accurately detected. Therefore, in the case of using the weighting mask of 4 x 5 shown in Fig. 14, R(0,0) in Fig. 3 in the embodiment 3 is set to 8/28 = 0.29, while that in Fig. 13 is set to 11/96 = 0.11. Thus, the half-tone portion can be more smoothly binarized and the edge portion of a character portion or the like can be more finely binarized and reproduced.

In the embodiments 3 to 6, the calculation of the correction value E for preservation of all densities during the processing has been executed by using the average values $m_0$ and $m_1$. However, for instance, the discrimination or the like to see if the value of E is set to 0 or not in the edge portion or the like can be realized by a well-known technique. For example, a two-dimensional Laplacian is obtained from the image data to be binarized, this value is processed on the basis of the threshold value, the edge portion is determined on the basis of the result of the discrimination of such a threshold value processing, and E is set to 0 in the edge portion. Even by this method, the similar effect is derived. Alternatively, the edge portion is designated in a wide region on the basis of a command obtained by an area designating operation of the operator without switching the processes every pixel and E can be also set to 0 in such a region.

In the above embodiments 1 to 6, assuming that the average value when the target pixel was binarized to 1 is set to $m_1$ and the average value when the target pixel was binarized to 0 is set to $m_0$, the data of the target pixel is binarized by using $(m_1 + m_0)/2$ as a threshold value.

In the embodiment which follows, explanation will now be made with respect to an example in the case where the average value of the binary data (the data which has previously been binarized before the target pixel), not including the target pixel, is set to a threshold value and the data of the target pixel is binarized.

Embodiment 7

The principle of the above system will be first described.

Fig. 14(1) is a diagram showing a multi-level density of each pixel of the input image.

In Fig. 14(1), f(i,j) denotes multi-level density data of the input image at the position of the target pixel to be binarized, i.e. set to a normalized value of 0 to 1. On the other hand, the binarization has already been finished at the pixel positions above a broken line. After the target pixel was binarized, the similar binarization is sequentially executed in a manner such that f(i,j+1), f(i,j+2), ....

Fig. 14(2) is a diagram showing binary image data. B(i,j) shows the density (having the value of 0 or 1) after the target pixel was binarized. The portion surrounded by a broken line denotes the pixel data which have already been binarized upon processing of the target pixel. Those pixel data are used to binarize the target pixel.

Fig. 14(3) is a diagram showing weighting masks. R denotes an example of the weighting mask to obtain the average density and is expressed by a matrix of a size of 3 x 3. The weight R(0,0) for the pixels which are not binarized yet is set such that R(0,0) = R(0,-1) = 0.

In the system, the weighted average density of the binary images near the target pixel is set to m(i,j) and is obtained by the following equation.

$$m(i,j) = \sum_{x=0}^{2} \sum_{y=-1}^{1} R(x,y) \cdot B(i-x, j-y) \quad \cdots \quad (13)$$

The target pixel f(i,j) is binarized by using the average density m(i,j) and the binary correction value E(i,j) which has already been assigned in accordance with the following equation.

$$\left.\begin{array}{l} \text{When } f(i,j) + E(i,j) > m(i,j), \\[4pt] \qquad B(i,j) = 1 \\[4pt] \quad E(i,j+1) = f(i,j) + E(i,j) - m(i,j) \\[4pt] \text{When } f(i,j) + E(i,j) \leq m(i,j), \\[4pt] \qquad B(i,j) = 0 \\[4pt] \quad E(i,j+1) = f(i,j) + E(i,j) - m(i,j) \\[4pt] \text{However, when } f(i,j) + E(i,j) = m(i,j) = 1, \\[4pt] \qquad B(i,j) = 1 \end{array}\right\} \quad (14)$$

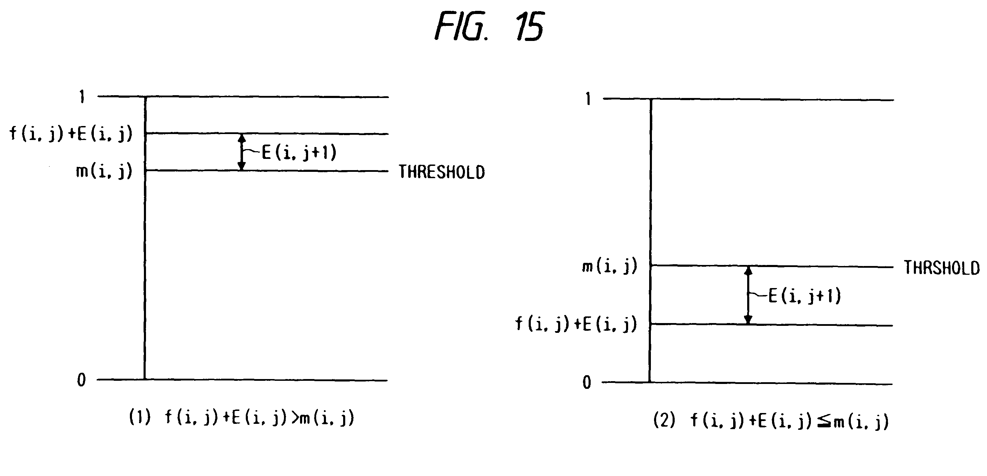

Fig. 15 is a diagram showing the equation (14).

In the equation (14), E(i,j) denotes a difference which is generated when the multi-level density f(i,j-1) of the pixel which precedes the target pixel (i,j) by one pixel, that is, of the pixel (i,j-1) was binarized to the binary density B(i,j-1). Namely, E(i,j) corresponds to the difference value between the multi-level density f(i,j-1) and the average density m(i, j-1) of the pixel near the target pixel. By binarizing the corrected value which is obtained by adding the binarization difference E(i,j) to the target pixel f(i,j), the image density after completion of the binarization can be completely preserved as an average density in the whole input image region.

By executing the processes in consideration of the binarization difference, the reproducing capability of the half tone is remarkably improved as compared with that in the average density approximating method.

On the other hand, in the equation (14), E(i,j+1) denotes a difference which is distributed to the pixel f(i,j+1) which is located beyond the target pixel (i,j) by one pixel.

In spite of the fact that a processing amount in the binarization system in the embodiment is much smaller than that in the error diffusion method, the image reproducing capability is equal to or higher than that in the error diffusion method, because in spite of the fact that the difference is merely corrected by one adjacent pixel, an effect similar to that in the case of distributing the difference to a plurality of pixels and correcting is equivalently obtained by obtaining the average density by using a plurality of data after completion of the binarization.

Since a schematic circuit construction in the embodiment is similar to that shown in Fig. 4, its description is omitted.

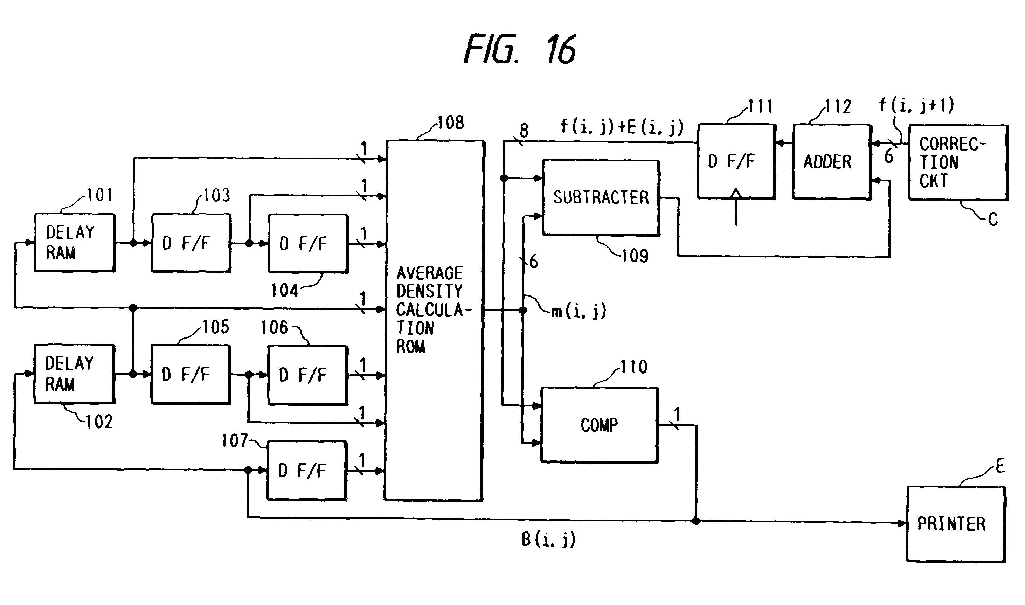

Fig. 16 is a block diagram showing the details of the binarizing circuit D in the embodiment 7.

In Fig. 16, reference numerals 101 and 102 denote delay RAMs each for storing the binarized data by an amount of one line; 103 to 107 and 111 indicate D F/F (D flip-flops) each for delaying the binary data by a period of time of one pixel; 108 an average density calculation ROM for calculating the average density of a predetermined region from the binary data of the pixels around the target pixel and for outputting the average density as a threshold value when the data of the target pixel is binarized; 109 a subtracter for calculating the difference between the input multi-level data of the target pixel and the threshold value which is output from the ROM 108; 110 a comparator for comparing the threshold value which is output from the ROM 108 with the multi-level data of the target pixel; and 112 an adder for adding the difference data which is output from the subtracter 109 and the 6-bit multi-level data sent from the correction circuit.

In the above construction, the comparator 110 outputs the 1-bit data B(i,j) which was binarized on the basis of the equation ⑭. The binary data is input to the RAMs 102 and 101 for delaying it every line. The binary data B(i-1,j+1) which was delayed by one line by the RAM 102 is output to the ROM 108. The binary data B(i-2,j+1) which was delayed by two lines by the RAM 101 is output to the ROM 108.

Further, the D F/F 103 outputs the B(i-2,j), the D F/F 104 outputs the B(i-2,j-1), the D F/F 105 outputs the B(i-1,j), the D F/F 106 outputs the B(i-1,j-1), and the D F/F 107 outputs the B(i,j-1), respectively, to the ROM 108.

The binary data denote the binary images of the peripheral pixels for the input image f(i,j) as shown in Fig. 14. By connecting the binary images to input addresses in the ROM 108, the binarization threshold value can be obtained at a high speed because the binarization threshold value m(i,j) shown in the equation ⑭ has previously been stored in the ROM 108 on the basis of the equation ⑬. The threshold value is input to the subtracter 109 and comparator 110. On the other hand, f(i,j) + E(i,j) is input from the D F/F 111 to the subtracter 109 and comparator 110.

On the basis of those two inputs, the subtracter 109 calculates the difference

$$f(i,j) + E(i,j) - m(i,j) \qquad \cdots \quad ⑮$$

between both sides of the inequality in the equation ⑭, that is, the difference between the average density value m(i, j) and the input data.

On the other hand, the comparator 110 compares f(i,j) + E(i,j) and m(i,j) on the basis of the two inputs and outputs the binary data B(i,j). Then, on the basis of the equation ⑮, the difference E(i,j+1) which is output from the subtracter 109 is added to the input image data f(i,j+1) by the adder 112. The D F/F 111 delays the addition value by a period of time of one clock of the data.

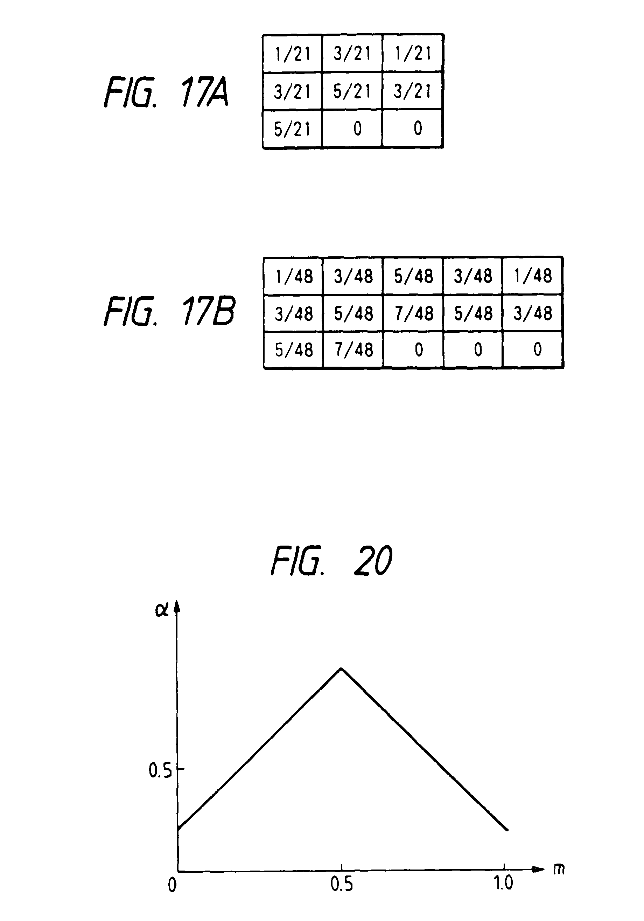

Fig. 17 shows examples of the weighting masks. The weighting mask of Fig. 17A is used to obtain the average value from the binary data of seven pixels. The weighting mask of Fig. 17B is used to obtain the average value from the binary data of twelve pixels. In the embodiment, since the weighting mask shown in Fig. 17A is used, in order to normalize to the image density levels (0 to 63) of six bits which are actually input, the values obtained by the equation ⑬ are increased by 63 times and the resultant values are stored into the average density calculation ROM table as the values which were converted into the 6-bit values.

As described above, according to the embodiment 7, the average density is calculated by using only the binary data which was binarized and the input multi-level data is binarized by using the average density as a threshold value. Therefore, a processing amount for binarization can be reduced as compared with that in the average density approximating method. Moreover, since the difference between the input multi-level data and the average density which is generated when the input multi-level data was binarized is corrected the gradations can be extremely improved.

In the embodiment, although the binarization difference E has been distributed to only the next pixel and corrected, if the binarization difference E is distributed to a plurality of pixels in the main scanning direction in a manner such that, for instance, in Fig. 14, 3E(i,j+1)/4 is distributed to the pixel (i,j+1) and E(i,j+1)/4 is distributed to the pixel (i,j+2), the reproducing capability of the gradations is improved even when the average processing mask is small.

On the other hand, the difference E can be also two-dimensionally distributed to a plurality of pixels near the target pixel at a predetermined distribution ratio in a manner similar to the case of the error diffusion method. In this case, although a hardware construction is slightly complicated, the uniform image can be obtained in the sub scanning direction as well as the main scanning direction and the reproducibility is improved.

On the other hand, although the weighting mask has weights which increase as the pixel approaches the target pixel, its gradient and distribution are not limited. The pixels at spaced apart positions which are not adjacent can be also used.

In the embodiment 7, the weighting mask of a matrix of 3 x 3 such as shown in an example of Fig. 17A has been used. However, generally, in order to smoothly binarize the half-tone portion, it is desirable to set the weight of the pixel adjacent to the target pixel to a small value.

Therefore, in the case of using the weighting matrix of a matrix of 3 x 5 shown in Fig. 17B, R(i-l,j) and R(i,j-1) are set to 7/48 = 0.15 as compared with 5/21 = 0.24 in the matrix of Fig. 17A, so that the half-tone portion can be smoothly binarized and reproduced.

In the embodiment, the calculation of the average density m has easily been realized by the ROM table. However, such a calculation can be also realized even by using seven AND gates and a plurality of adders. In this case, the processing speed can be further made high. On the other hand, by assembling such a processing circuit into a gate array or the like, a hardware scale can be remarkably reduced.

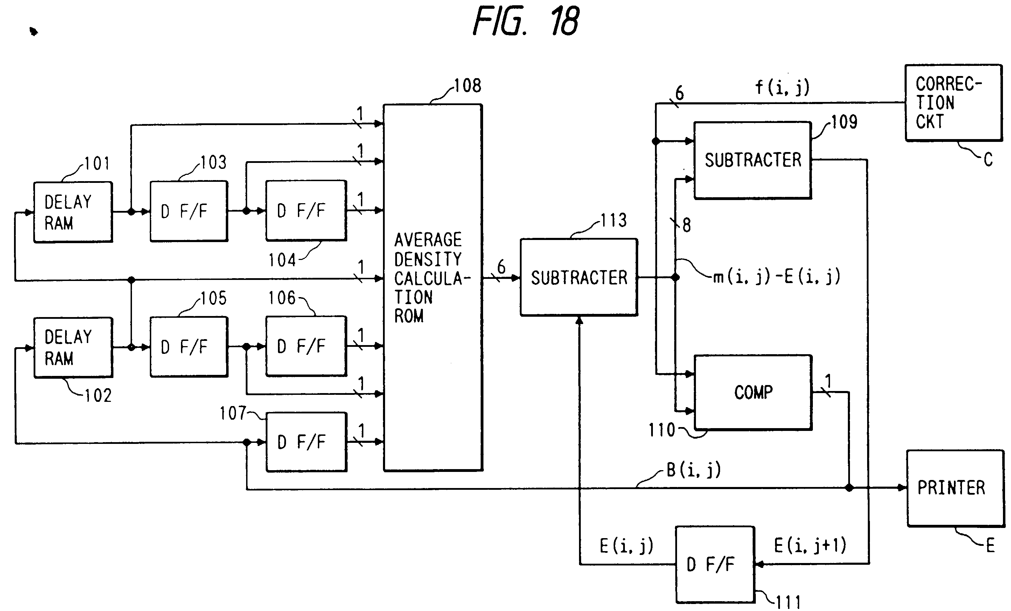

In the embodiment, the correction has been performed by directly adding the difference E(i,j) to the target pixel density f(i,j). However, as shown in Fig. 18, even when the difference E(i,j) is accounted for by subtracting it from the average density by using a subtracter 113, the similar effect can be also obtained.

Embodiment 9

The embodiment 8 relates to a partially modified form of the embodiment 7.

That is, in the embodiment 8, the difference E(i,j+1) when the next pixel is binarized is expressed by the following equation. In the case where

$$\left.\begin{array}{l} |f(i,j) + E(i,j) - m(i,j)| > \alpha, \\[2mm] (\alpha \text{ is a constant}) \end{array}\right\} \cdots \text{\textcircled{16}}$$

$$E(i,j+1) = 0$$

In the cases other than the above case,

$$E(i,j+1) = f(i,j) + E(i,j) - m(i,j) \cdots \text{\textcircled{17}}$$

Therefore, as shown in the equations ⑯ and ⑰, in the comparison between the average density m upon binarization and the corrected target pixel density in which the difference is incorporated, if the corrected target pixel density lies within a predetermined range of a value near the average density m (that is, when the difference between the average density m and the corrected target pixel density lies within a predetermined range), the difference between the corrected target pixel density and the average density is assigned as a correction value when the next pixel is binarized in accordance with the equation ⑰. On the other hand, if it is out of the predetermined range, that is, when the difference between the corrected target pixel density and the average density is sufficiently large, the correction value is set to 0 and the correction upon binarization of the next pixel is not executed. Namely, in the case of correcting the difference, the density change of the image near the target pixel is small, so that it is determined that such as image is in the image area having a half-tone. Therefore, the difference between the image density and the average density which occurs due to the binarization is corrected by the next pixel, so that the gentle density change of the image can be false half-tone processed with a high fidelity. That is, the gradations can be improved. On the other hand, in the case where the difference is not corrected, there is the edge portion in a character, a diagram, or the like, that is, the target pixel is determined to be suddenly changed as compared with the density of the image near the target pixel. Thus, the correction value is set to 0 for the pixel in such a case and the deterioration in resolution due to the preservation of the density is suppressed.

Consequently, the resolution in the edge portion can be improved.

As mentioned above, according to the characteristic processing system of the embodiment 8, in the half-tone image area, the density is preserved in the binary image by using the binarization difference in accordance with the image density change. In the high contrast image portion such as a character or the like, in order to prevent the blurring of the image due to the preservation of the density, the correction of the binarization difference is not used.

Since a schematic circuit construction in the embodiment 8 is similar to that shown in Fig. 4, its description is omitted.

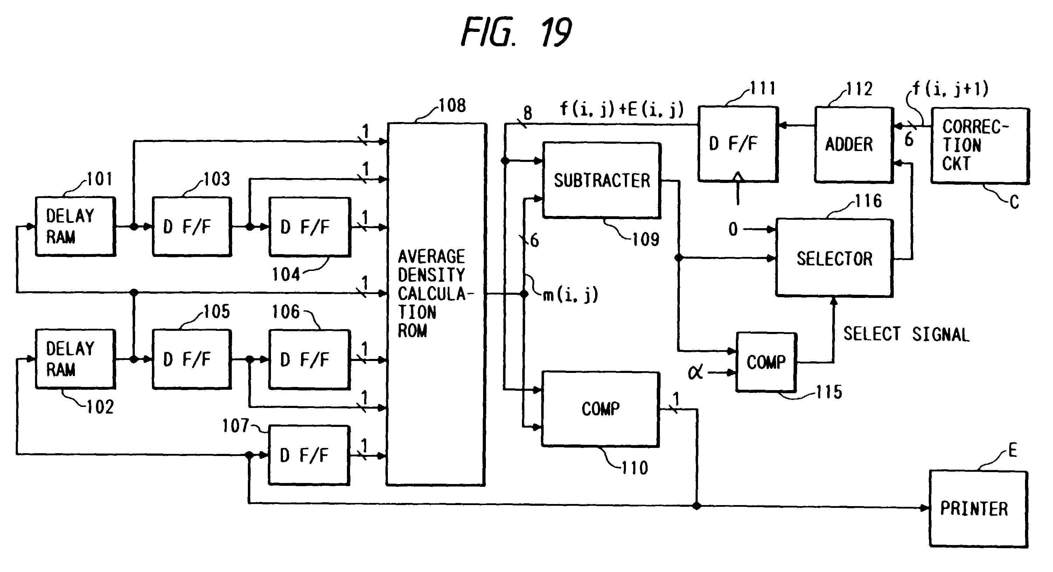

Fig. 19 is a block diagram showing the details of the binarizing circuit D in the embodiment 8.

In Fig. 19, the same parts and elements as those shown in Fig. 16 are designated by the same reference numerals and their descriptions are omitted.

Reference numeral 115 denotes a comparator for comparing the difference which is sent from the subtracter 109, between the multi-level data of the target pixel and the threshold value, with a predetermined value ($\alpha$). Reference numeral 116 indicates a selector for selecting either 0 or an output of the subtracter 109 on the basis of a select signal from the comparator 115.

In Fig. 19, the comparator 110 outputs the 1-bit data B(i,j) which was binarized on the basis of the equation ⑭. The binary data is input to the RAMs 102 and 101 each for delaying it every line. The binary data B(i-1,j+1) which was delayed by one line by the RAM 102 is output to the ROM 108. The binary data B(i-2,j+1) which was delayed by two lines by the RAM 101 is output to the ROM 108.

Further, the D F/F 103 outputs the B(i-2,j), the D F/F 104 outputs the B(i-2,j-1), the D F/F 105 outputs the B(i-1,j), the D F/F 106 outputs the B(i-1, j-1), and the D F/F 107 outputs the B(i,j-1), respectively, to the ROM 108.

As shown in Fig. 14, the binary data denotes the binary images of the peripheral pixels for the input image f(i,j). By connecting the binary images to input addresses in the ROM 108, the binarization threshold value can be obtained at a high speed because the binarization threshold value m(i,j) shown in the equation ⑭ has previously been stored in the ROM 108 on the basis of the equation ⑬.

The threshold value is input to the subtracter 109 and comparator 110. On the other hand, f(i,j) + E(i,j) is input from the D F/F 111 to the subtracter 109 and comparator 110.

On the basis of the two inputs, the subtracter 109 calculates the difference

$$E(i,j+1) \; = \; f(i,j) \; + \; E(i,j) \; - \; m(i,j) \quad \cdots \quad \textcircled{18}$$

between both sides of the inequality in the equation ⑭.

On the other hand, the comparator 110 compares f(i,j) + E(i,j) with m(i,j) on the basis of the two inputs and outputs the binary data B(i,j). Then, the difference E(i,j+1) which is output from the subtracter 109 is input to the selector 116 and the comparator 115 on the basis of the equation⑱.

The comparator 115 compares the difference E(i,j+1) with the constant $\alpha$ by the equation ⑯ and outputs the select signal to the selector 116 on the basis of the result of the comparison.

As a result of the select signal sent from the comparator 115, when the absolute value of the difference E(i,j+1) is larger than $\alpha$ the selector 116 selects and outputs E(i,j+1) = 0. If it is equal to or less than $\alpha$, the selector 116 directly selects and outputs the output signal of the subtracter 109.

The difference E(i,j+1) is added to the input image data f(i,j+1) by the adder 112. The D F/F 111 delays the addition value by a period of time of one clock of the data.

In a manner similar to the above, by repeating the above processes, the binarization is sequentially executed.

The weighting mask shown in Fig. 17 is used.

As described above, according to the embodiment 8, the average density is calculated by using only the binary data which was binarized and the input multi-level data is binarized by using the average density as a threshold value. Therefore, a processing amount for binarization can be reduced as compared with that in the average density approximating method. Moreover, when the difference between the average density which is generated upon binarization of the input multi-level data and the input multi-level data lies within a predetermined range, the difference is corrected, so that the gradations can be remarkably improved.

Further, in the embodiment, when the difference between the average density and the input multi-level data is larger than a predetermined value, the difference is not corrected. Thus, the deterioration in resolution due to the preservation of the density is prevented and the edge portion can be clearly reproduced.

In the embodiment, the binarization difference E has been distributed to only the next pixel and corrected. However, if the binarization difference E is distributed to a pluraltiy of pixels in the main scanning direction in a manner such that, for instance, in Fig. 14, 3E(i,j+1)/4 is distributed to the pixel (i,j+1) and E(i,j+1)/4 is distributed to the pixel (i,j+2), the reproducing capability of the gradations is improved even if the average processing mask is small.

On the other hand, the binarization difference can be also two-dimensionally distributed to a plurality of pixels near the target pixel at a predetermined distribution ratio in a manner similar to the case of the error diffusion method. In this case, although a hardware construction is slightly complicated, the uniform image can be obtained in the sub scanning direction as well as the main scanning direction and the reproducibility is improved.

On the other hand, although the weighting mask has weights which increase as the pixel approaches to the target pixel, its gradient and distribution are not limited. The pixels existing at spaced apart positions which are not adjacent can be also used.

Embodiment 9

In the embodiment 8, the binarization difference E has been divided into two cases shown by the equations ⑯ and ⑰ and when the difference E is equal to or larger than a predetermined value set using the constant $\alpha$, the difference E is set to 0 and is not distributed to the next pixel. However, the value of the constant a can be also changed in accordance with the average density value or target pixel density value.

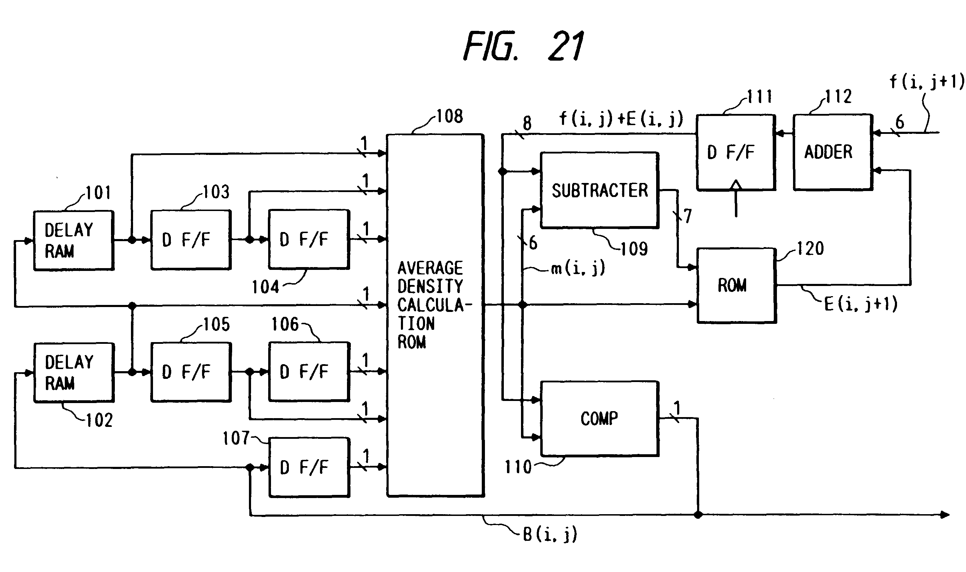

For instance, as shown in Fig. 20, if the value of $\alpha$ is set to be reduced as the average density approaches 0 or 1, the edge portion of a black character in the white background, a blank character in the black background, or the like can be more finely binarized.

Embodiment 10

The following equation ⑲ can be also used in place of the equation ⑯ in the embodiment 8.

$$
\left.
\begin{array}{l}
\text{In the case where } m(i,j) < k \text{ and} \\[4pt]
f(i,j) + e(i,j) - m(i,j) > \alpha \\[4pt]
\text{or} \quad m(i,j) > 1 - k \text{ and} \\[4pt]
f(i,j) + E(i,j) - m(i,j) < -\alpha, \\[4pt]
E(i,j+1) = 0
\end{array}
\right\} \quad ⑲
$$

where, k is a constant and if k is set to about 0 or 1, the good result can be derived.

According to the embodiment, by setting the difference E to 0 in the case where the average density value approached 0 or 1, the character portion can be finely binarized in a manner similar to the embodiment 9.

As shown in Fig. 21, in the embodiments 9 and 10, by inputting the output m(i,j) of the average density calculation ROM 108 to an address terminal in a difference calculation ROM 120, those embodiments can be easily realized by the table converting processes based on the data which has previously been written.

Embodiment 11

In the embodiment 8, the weighting mask of a matrix of 3 x 3 as shown in an example of Fig. 17A has been used. However, generally, to smoothly binarize the half-tone portion, it is desirable to set the weight of the pixel adjacent to the target pixel to a small value.

Therefore, in the case of using the weighting mask of a matrix of 3 x 5 shown in Fig. 17B, R(i-1,j) and R(i,j-1) in Fig. 17B are set to $7/48 = 0.15$ while those in Fig. 17A in the embodiment 8 are set to $5/21 = 0.24$, so that the half-tone portion can be more smoothly binarized and reproduced.

In the embodiment 8, the calculation of the average density m has easily been realized by the ROM table. However, such calculation can be also realized by using seven AND gates and a plurality of adders. In this case, the processing speed can be further made high. On the other hand, by assembling such a processing circuit into a gate array or the like, a hardware scale can be remarkably reduced.

In the embodiment, the average density m which is used in the present system has been used in the calculation of the correction value E for preservation of all densities during the processing. However, the determination or the like to see if E is set to 0 or not in the edge portion or the like can be also realized by the well-known technique. For instance, a two-dimensional Laplacian is obtained from the image data to be binarized, this value is processed to a threshold value, the edge portion is discriminated on the basis of the result of the discrimination of such a threshold value process, and E is set to 0 in the edge portion. The similar result is also obtained even by such a method. Alternatively, the edge portion is designated in a wide area on the basis of a command obtained by the area designating operation by the operator without switching the process every pixel and E can be also set to 0 in such an area.

Although the embodiment has been described with respect to the case where the number of kind of the input data is one (one color), the invention can be also applied to a color image by setting the input data to three colors of R, G, and B.

As described above, according to the embodiments, an image having excellent gradation and resolution can be obtained in a short time by a simple hardware construction.

The present invention is not limited to the foregoing embodiments but many modifications and variations are possible within the scope of the appended claims of the invention.

Attention is drawn to concurrently filed related application EP-A-0 382 580.

**Claims**

1.  Image processing apparatus comprising:

    input means (A,B,C) for inputting pixel data; and processing means (1 to 8, 10; 101 to 108, 110) for processing input pixel data to digitized output pixel data,
    the processing means comprising:
    digitizing means (10; 110) for digitizing the input pixel data by comparison with a threshold value; and

calculating means (1 to 8; 101 to 108) for calculating an average pixel data value for an image region comprising a plurality of pixels digitized before a given pixel (the target pixel) thereby to provide the threshold value for use with the target pixel,

characterised in that

the calculating means (1 to 8; 101 to 108) calculates the average pixel data value from digitized pixel data output from the digitizing means (10; 110),

and in that the apparatus comprises correction means (9, 11, 12, 13, 14, 15, 16, 100; 109, 111, 112, 113, 115, 116, 120) for correcting the operation of the processing means on one or more pixels which are digitized after the target pixel for the difference (the digitization difference) between (i) a value for the target pixel before it is digitized by the digitizing means and (ii) a reference value which is an average of digitized pixel data output from the digitizing means for an image region comprising a plurality of pixels digitized before the target pixel.

2. Apparatus according to claim 1 in which the said reference value of the correction means is different from the average pixel data value calculated by the calculating means.

3. Apparatus according to claim 2 in which the reference value of the correction means is an average pixel data value for an image region which includes the target pixel and the average pixel data value calculated by the calculating means is for an image region which does not include the target pixel (Figs. 5, 8, 9, 10).

4. Apparatus according to claim 3 in which the correction means comprises first means (9) for obtaining the difference between a value for the target pixel before it is digitized and the threshold value provided by the calculating means, and second means (12; 100) for receiving the difference value from the first means (9) and receiving the digitized pixel data for the target pixel from the digitizing means (10) and outputting a revised difference value, taking into account the digitized pixel data for the target pixel, as the digitization difference.

5. Apparatus according to claim 4 in which the second means (12; 100) comprises a memory which receives the difference value from the first means (9) and the digitized pixel data from the digitizing means (10) as address inputs.

6. Apparatus according to claim 1 in which the said reference value of the correction means is the same as the average pixel data value calculated by the calculating means.

7. Apparatus according to claim 6 in which the said reference value of the correction means and the average pixel data value calculated by the calculating means are both an average pixel data value for an image region which does not include the target pixel (Figs. 16, 18, 19, 21).

8. Apparatus according to claim 7 in which the correction means comprises first means (109) for obtaining the difference between a value for the target pixel before it is digitized and the threshold value provided by the calculating means.

9. Apparatus according to any one of the preceding claims in which the correction means corrects the operation of the processing means irrespective of the value of the digitization difference.

10. Apparatus according to any one of claims 1 to 8 in which the correction means corrects the operation of the processing means for the digitization difference of the target pixel only if the digitization difference of the target pixel does not exceed a predetermined level.

11. Apparatus according to claim 4 or claim 5 in which the second means (100) outputs the said revised difference value as the digitization difference only if the difference value from the first means (9) does not exceed a predetermined level, and otherwise outputs zero as the digitization difference.

12. Apparatus according to claim 8 in which the correction means comprises second means (115, 116, Fig. 19) for receiving the difference value from the first means and outputting it as the digitization difference only if it does not exceed a predetermined level, and otherwise outputting zero as the digitization difference.

13. Apparatus according to any one of the preceding claims in which correction means comprises means (11, 13; 15, 16; 111, 112) for combining the input pixel data from the input means (A, B, C) with the digitization difference to obtain corrected input pixel data, and for passing the corrected input pixel data to the digitizing means for digitization, thereby to correct the operation of the processing means (Figs. 5, 8, 10, 16, 19, 21).

14. Apparatus according to any one of claims 1 to 12 in which the correction means comprises means (20; 113) for combining the average pixel data value calculated by the calculating means with the digitization difference to obtain a modified average value, and passing the modified average value to the digitizing means as the threshold value for digitization (Figs. 9, 18).

15. Apparatus according to any one of the preceding claims in which the calculating means comprises a calculation memory (8; 108) for receiving digitized pixel data for the pixels of the said image region as address inputs, and outputting the average pixel data value for the said image region.

16. Apparatus according to any one of the preceding claims in which the calculating means calculates the said average pixel data value as a weighted average according to a predetermined weighting mask.

17. Apparatus according to any one of the preceding claims in which the calculating means comprises means (1 to 7; 101 to 107) for receiving and delaying the digitized pixel data output from the digitizing means.

18. Apparatus according to any one of the preceding claims in which the digitizing means (10; 110) binarizes the input pixel data.

19. An image processing method comprising digitizing input image pixel data with reference, in the case of digitizing a given pixel (the target pixel), to an average pixel data value for an image region comprising a plurality of pixels digitized before the target pixel,

characterised in that the average pixel data value is an average of the digitized values of the pixels of the said image region,
and in that the digitization of one or more pixels which are digitized after the target pixel is corrected for the difference between a data value for the target pixel before digitization and an average of the digitized values of the pixels of an image region comprising a plurality of pixels digitized before the target pixel.

20. A method according to claim 19 in which the pixel data is optical density data.

**Patentansprüche**

1. Bildverarbeitungseinrichtung mit:

einer Eingabeeinrichtung (A, B, C) zum Eingeben von Bildelementedaten und
einer Verarbeitungseinrichtung (1 bis 8, 10; 101 bis 108, 110) für das Verarbeiten von eingegebenen Bildelementedaten zu digitalisierten Ausgabe-Bildelementedaten,
wobei die Verarbeitungseinrichtung
eine Digitalisiereinrichtung (10; 110) zum Digitalisieren der eingegebenen Bildelementedaten durch Vergleich mit einem Schwellenwert und
eine Recheneinrichtung (1 bis 8; 101 bis 108) zum Berechnen eines mittleren Bildelementedatenwertes für einen Bildbereich aufweist, der eine Vielzahl von Bildelementen enthält, die vor einem bestimmten Bildelement (Ziel-Bildelement) digitalisiert sind, um dadurch den Schwellenwert für den Einsatz bei dem Ziel-Bildelement zu erhalten,
**dadurch gekennzeichnet,**
daß die Recheneinrichtung (1 bis 8; 101 bis 108) den mittleren Bildelementedatenwert aus den von der Digitalisiereinrichtung (10, 110) ausgegebenen digitalisierten Bildelementedaten berechnet und
daß die Bildverarbeitungseinrichtung eine Korrektureinrichtung (9, 11, 12, 13, 14, 15, 16, 100; 109, 111, 112, 113, 115, 116, 120) zum Korrigieren der Funktion der Verarbeitungseinrichtung an mindestens einem Bildelement, welches nach dem Ziel-Bildelement digitalisiert ist, hinsichtlich der Differenz (Digitalisierungsdifferenz) zwischen (i) einem Wert für das Ziel-Bildelement vor dessen Digitalisierung durch die Digitalisiereinrichtung und (ii) einem Bezugswert aufweist, der ein Mittelwert von digitalisierten Bildelementedaten ist, die aus der Digitalisiereinrichtung für eine Bildbereich ausgegeben sind, der eine Vielzahl von vor dem Ziel-Bildelement digitalisierten Bildelementen enthält.

2. Einrichtung nach Anspruch 1, in der der Bezugswert der Korrektureinrichtung von dem durch die Recheneinrichtung berechneten mittleren Bilddatenwert verschieden ist.

**3.** Einrichtung nach Anspruch 2, in der der Bezugswert der Korrektureinrichtung ein mittlerer Bildelementedatenwert für einen Bildbereich ist, der das Ziel-Bildelement enthält, und der durch die Recheneinrichtung berechnete mittlere Bildelementedatenwert der Wert für einen Bildbereich ist, der nicht das Ziel-Bildelement enthält (Fig. 5, 8, 9, 10).

**4.** Einrichtung nach Anspruch 3, in der die Korrektureinrichtung eine erste Einrichtung (9), die die Differenz zwischen einem Wert für das Ziel-Bildelement vor dessen Digitalisierung und dem durch die Recheneinrichtung gelieferten Schwellenwert ermittelt, und eine zweite Einrichtung (12; 100) aufweist, die den Differenzwert aus der ersten Einrichtung (9) und die digitalisierten Bildelementedaten für das Ziel-Bildelement aus der Digitalisiereinrichtung (10) aufnimmt und als Digitalisierungsdifferenz einen unter Berücksichtigung der digitalisierten Bildelementedaten für das Ziel-Bildelement revidierten Differenzwert abgibt.

**5.** Einrichtung nach Anspruch 4, in der die zweite Einrichtung (12; 100) einen Speicher aufweist, der als Adresseneingangssignale den Differenzwert aus der ersten Einrichtung (9) und die digitalisierten Bildelementedaten aus der Digitalisiereinrichtung (10) aufnimmt.

**6.** Einrichtung nach Anspruch 1, in der der Bezugswert der Korrektureinrichtung der gleiche ist wie der durch die Recheneinrichtung berechnete Bildelementedatenwert.

**7.** Einrichtung nach Anspruch 6, in der der Bezugswert der Korrektureinrichtung und der durch die Recheneinrichtung berechnete mittlere Bildelementedatenwert beide ein mittlerer Bildelementedatenwert für einen Bildbereich sind, der nicht das Ziel-Bildelement enthält (Fig. 16, 18, 19, 21).

**8.** Einrichtung nach Anspruch 7, in der die Korrektureinrichtung eine erste Einrichtung (109) zum Ermitteln der Differenz zwischen einem Wert für das Ziel-Bildelement vor dessen Digitalisierung und dem durch die Recheneinrichtung gelieferten Schwellenwert aufweist.

**9.** Einrichtung nach einem der vorangehenden Ansprüche, in der die Korrektureinrichtung die Funktion der Verarbeitungseinrichtung unabhängig von dem Wert der Digitalisierungsdifferenz korrigiert.

**10.** Einrichtung nach einem der Ansprüche 1 bis 8, in der die Korrektureinrichtung die Funktion der Verarbeitungseinrichtung hinsichtlich der Digitalisierungsdifferenz für das Ziel-Bildelement nur dann korrigiert, wenn die Digitalisierungsdifferenz für das Ziel-Bildelement nicht einen vorbestimmten Wert übersteigt.

**11.** Einrichtung nach Anspruch 4 oder Anspruch 5, in der die zweite Einrichtung (100) als Digitalisierungsdifferenz den revidierten Differenzwert nur dann abgibt, wenn der Differenzwert aus der ersten Einrichtung (9) nicht einen vorbestimmten Wert übersteigt, und andernfalls als Digitalisierungsdifferenz "0" abgibt.

**12.** Einrichtung nach Anspruch 8, in der die Korrektureinrichtung eine zweite Einrichtung (115, 116, Fig. 19) aufweist, die den Differenzwert aus der ersten Einrichtung aufnimmt und diesen als Digitalisierungsdifferenz nur dann abgibt, wenn er nicht einen vorbestimmten Wert übersteigt, und anderenfalls als Digitalisierungsdifferenz "0" abgibt.

**13.** Einrichtung nach einem der vorangehenden Ansprüche, in der die Korrektureinrichtung eine Einrichtung (11, 13; 15, 16; 111, 112) enthält, die die aus der Eingabeeinrichtung (A, B, C) eingegebenen Bildelementedaten mit der Digitalisierungsdifferenz kombiniert, um korrigierte Eingabe-Bildelementedaten zu erhalten, und die die korrigierten Eingabe-Bildelementedaten zur Digitalisierung zu der Digitalisiereinrichtung weitergibt, um dadurch die Funktion der Verarbeitungseinrichtung zu korrigieren (Fig. 5, 8, 10, 16, 19, 21).

**14.** Einrichtung nach einem der Ansprüche 1 bis 12, in der die Korrektureinrichtung eine Einrichtung (20; 119) enthält, die den durch die Recheneinrichtung berechneten mittleren Bildelementedatenwert mit der Digitalisierungsdifferenz kombiniert, um einen abgeänderten Mittelwert zu erhalten, und den abgeänderten Mittelwert als Schwellenwert für die Digitalisierung zu der Digitalisiereinrichtung weitergibt (Fig. 9, 18).

**15.** Einrichtung nach einem der vorangehenden Ansprüche, in der die Recheneinrichtung einen Rechenspeicher (8; 108) enthält, der als Adresseneingangssignale die digitalisierten Bildelementedaten für die Bildelemente des Bildbereiches aufnimmt und den mittleren Bildelementedatenwert für den Bildbereich abgibt.

**16.** Einrichtung nach einem der vorangehenden Ansprüche, in der die Recheneinrichtung den mittleren Bildelementedatenwert als einen entsprechend einer vorbestimmten Gewichtungsmaske gewichteten Mittelwert berechnet.

**17.** Einrichtung nach einem der vorangehenden Ansprüche, in der die Recheneinrichtung eine Einrichtung (1 bis 7; 101 bis 107) enthält, welche die von der Digitalisiereinrichtung abgegebenen digitalisierten Bildelementedaten aufnimmt und verzögert.

**18.** Einrichtung nach einem der vorangehenden Ansprüche, in der die Digitalisiereinrichtung (10; 110) die eingegebenen Bildelementedaten binär digitalisiert.

**19.** Bildverarbeitungsverfahren, welches das Digitalisieren von eingegebenen-Bildelementedaten im Falle des Digitalisierens eines bestimmten Bildelementes (Ziel-Bildelementes) in Bezug auf einen mittleren Bildelementedatenwert für einen Bildbereich umfaßt, der eine Vielzahl von vor dem ziel-Bildelement digitalisierten Bildelementen enthält,

> **dadurch gekennzeichnet,** daß der mittlere Bildelementedatenwert ein Mittelwert der digitalisierten Werte für die Bildelemente des Bildbereiches ist und
> daß die Digitalisierung von mindestens einem Bildelement, welches nach dem Ziel-Bildelement digitalisiert wird, hinsichtlich der Differenz zwischen einem Datenwert für das Ziel-Bildelement vor der Digitalisierung und einem Mittelwert der digitalisierten Werte der Bildelemente eines Bildbereiches korrigiert wird, der eine Vielzahl von vor dem Ziel-Bildelement digitalisierten Bildelementen enthält.

**20.** Verfahren nach Anspruch 19, bei dem die Bildelementedaten optische Dichtedaten sind.

**Revendications**

**1.** Appareil de traitement d'images comprenant:

> un moyen d'introduction (A, B, C) pour l'introduction de données de pixel; et
> un moyen de traitement (1 à 8, 10; 101 à 108, 110) pour le traitement de données de pixel introduites en données de pixel de sortie numérisées,
> le moyen de traitement comprenant:
> un moyen de numérisation (10; 110) pour numériser les données de pixel introduites par comparaison avec une valeur de seuil; et
> un moyen de calcul (1 à 8; 101 à 108) pour le calcul d'une valeur moyenne de données de pixel pour une région d'image comprenant une pluralité de pixels numérisés avant un pixel donné (le pixel cible) afin d'obtenir la valeur de seuil destinée à être utilisée avec le pixel cible,
> caractérisé en ce que
> le moyen de calcul (1 à 8; 101 à 108) calcule la valeur moyenne de données de pixel à partir des données de pixel numérisées délivrées par le moyen de numérisation (10; 110),
> et en ce que l'appareil comprend un moyen de correction (9, 11, 12, 13, 14, 15, 16, 100; 109, 111, 112, 113, 115, 116, 120) pour la correction de l'opération du moyen de traitement sur un ou plusieurs pixels qui sont numérisés après le pixel cible pour la différence (la différence de numérisation) entre (i) une valeur pour le pixel cible avant qu'il soit numérisé par le moyen de numérisation et (ii) une valeur de référence qui est une moyenne des données de pixel numérisées délivrées par le moyen de numérisation pour une région d'image comprenant une pluralité de pixels numérisés avant le pixel cible.

**2.** Appareil selon la revendication 1, dans lequel ladite valeur de référence du moyen de correction est différente de la valeur moyenne de données de pixel calculée par le moyen de calcul.

**3.** Appareil selon la revendication 2, dans lequel la valeur de référence du moyen de correction est une valeur moyenne de données de pixel concernant une région d'image qui comporte le pixel cible, et la valeur moyenne de données de pixel calculée par le moyen de calcul concerne une région d'image qui ne comporte pas le pixel cible (figures 5, 8, 9, 10).

**4.** Appareil selon la revendication 3, dans lequel le moyen de correction comprend un premier moyen (9) pour l'obtention de la différence entre une valeur du pixel cible avant qu'il soit numérisé et la valeur de seuil fournie par le moyen de calcul, et un second moyen (12; 100) pour recevoir la valeur de différence en provenance du premier moyen (9) et recevoir les données de pixel numérisées pour le pixel cible en provenance du moyen de numérisation (10) et délivrer une valeur de différence révisée, tenant compte des données de pixel numérisées pour le pixel cible, sous la forme d'une différence de numérisation.

**5.** Appareil selon la revendication 4, dans lequel le second moyen (12; 100) comprend une mémoire qui reçoit la valeur de différence en provenance du premier moyen (9) et les données de pixel numérisées en provenance du moyen de numérisation (10) sous la forme d'entrées d'adresses.

**6.** Appareil selon la revendication 1, dans lequel ladite valeur de référence du moyen de correction est la même que la valeur moyenne de données de pixel calculée par le moyen de calcul.

**7.** Appareil selon la revendication 6, dans lequel ladite valeur de référence du moyen de correction et la valeur moyenne de données de pixel calculée par le moyen de calcul constituent toutes deux une valeur moyenne de données de pixel pour une région d'image qui ne comporte pas le pixel cible (figures 16, 18, 19, 21).

**8.** Appareil selon la revendication 7, dans lequel le moyen de correction comprend un premier moyen (109) pour l'obtention de la différence entre une valeur du pixel cible avant qu'il soit numérisé et la valeur de seuil fournie par le moyen de calcul.

**9.** Appareil selon l'une quelconque des revendications précédentes, dans lequel le moyen de correction corrige l'opération du moyen de traitement quelle que soit la valeur de la différence de numérisation.

**10.** Appareil selon l'une quelconque des revendications 1 à 8, dans lequel le moyen de correction corrige l'opération du moyen de traitement pour la différence de numérisation du pixel cible, uniquement si la différence de numérisation du pixel cible n'excède pas un niveau prédéterminé.

**11.** Appareil selon la revendication 4 ou la revendication 5, dans lequel le second moyen (100) délivre ladite valeur de différence révisée sous la forme de la différence de numérisation, uniquement si la valeur de différence en provenance du premier moyen (9) n'excède pas un niveau prédéterminé, et sinon, délivre zéro sous la forme de la différence de numérisation.

**12.** Appareil selon la revendication 8, dans lequel le moyen de correction comprend un second moyen (115, 116, figure 19) pour recevoir la valeur de différence en provenance du premier moyen et pour la délivrer sous la forme d'une différence de numérisation uniquement si elle n'excède pas un niveau prédéterminé, et sinon, pour délivrer zéro sous la forme de la différence de numérisation.

**13.** Appareil selon l'une quelconque des revendications précédentes, dans lequel le moyen de correction comprend un moyen (11, 13; 15, 16; 111, 112) pour combiner les données de pixel introduites en provenance du moyen d'introduction (A, B, C) avec la différence de numérisation pour obtenir des données de pixel introduites corrigées, et pour faire passer les données de pixel introduites corrigées vers le moyen de numérisation en vue d'une numérisation, afin de corriger l'opération du moyen de traitement (figures 5, 8, 10, 16, 19, 21).

**14.** Appareil selon l'une quelconque des revendications 1 à 12, dans lequel le moyen de correction comprend un moyen (20; 113) pour combiner la valeur moyenne de données de pixel calculée par le moyen de calcul avec la différence de numérisation pour obtenir une valeur moyenne modifiée, et pour faire passer la valeur moyenne modifiée vers le moyen de numérisation sous la forme de la valeur de seuil en vue de la numérisation (figures 9, 18).

**15.** Appareil selon l'une quelconque des revendications précédentes, dans lequel le moyen de calcul comprend une mémoire de calcul (8; 108) pour recevoir des données de pixel numérisées, pour les pixels de ladite région d'image, sous la forme d'entrées d'adresses, et pour délivrer la valeur moyenne de données de pixel pour ladite région d'image.

**16.** Appareil selon l'une quelconque des revendications précédentes, dans lequel le moyen de calcul calcule ladite valeur moyenne de données de pixel sous la forme d'une moyenne pondérée en fonction d'un masque de pondération prédéterminé.

**17.** Appareil selon l'une quelconque des revendications précédentes, dans lequel le moyen de calcul comprend un moyen (1 à 7; 101 à 107) pour recevoir et retarder les données de pixel numérisées délivrées par le moyen de numérisation.

**18.** Appareil selon l'une quelconque des revendications précédentes, dans lequel le moyen de numérisation (10; 110) met sous forme binaire les données de pixel introduites.

**19.** Procédé de traitement d'images comprenant la numérisation de données de pixel d'image introduites avec une référence, dans le cas de la numérisation d'un pixel donné (le pixel cible), en une valeur moyenne de données de pixel pour une région d'image comprenant une pluralité de pixels numérisés avant le pixel cible,

caractérisé en ce que la valeur moyenne de données de pixel est une moyenne des valeurs numérisées des pixels de ladite région d'image,
et en ce que la numérisation de un ou plusieurs pixels, qui sont numérisés après le pixel cible, est corrigée pour la différence entre une valeur de données pour le pixel cible avant numérisation et une moyenne des valeurs numérisées des pixels d'une région d'image comprenant une pluralité de pixels numérisés avant le pixel cible.

**20.** Procédé selon la revendication 19, dans lequel les données de pixel sont des données de densité optique.

# FIG. 1

## (1) MULTI-LEVEL IMAGE

| f(i-2, j-1) | f(i-2, j) | f(i-2, j+1) |
|---|---|---|
| f(i-1, j-1) | f(i-1, j) | f(i-1, j+1) |
| f(i, j-1) | f( i,j ) | f( i,j+1 ) |

## (2) BINARY IMAGE

| B(i-2, j-1) | B(i-2, j) | B(i-2, j+1) |
|---|---|---|
| B(i-1, j-1) | B(i-1, j) | B(i-1, j+1) |
| B(i, j-1) | B( i,j ) | |

## (3) WEIGHTING MASK

| R(2, 1) | R(2, 0) | R(2, -1) |
|---|---|---|
| R(1, 1) | R(1, 0) | R(1, -1) |
| R(0, 1) | R(0, 0) | R(0, -1) |

$$R = R(0, -1) = 0$$

# FIG. 2

(1)  $f(i,j)+E(i,j) > (m1+m0)/2$

(2)  $f(i,j)+E(i,j) \leq (m1+m0)/2$

EP 0 382 581 B1

## FIG. 3

| 1 | 3 | 1 |
|---|---|---|
| 3 | 5 | 3 |
| 5 | 8 | 0 |

S=29

WEIGHTING MASK 1

| 1 | 3 | 5 | 3 | 1 |
|---|---|---|---|---|
| 3 | 5 | 7 | 5 | 3 |
| 5 | 7 | 10 | | |

S=58

WEIGHTING MASK 2

## FIG. 4

INPUT SENSOR UNIT (A) → A/D (B) → CORRECTION CKT (C) → BINARIZATION CKT (D) → PRINTER (E)

FIG. 5

# FIG. 6

$$|f(i,j)+E(i,j)-(m1(i,j)+m0(i,j))/2|$$

|  | B(i,j) | |
| --- | --- | --- |
| 7 BIT | B=1 | B=0 |
| 0 | -9 | +9 |
| 1 | -8 | +8 |
| ⋮ | | |
| 8 | -1 | +1 |
| 9 | 0 | 0 |
| 10 | +1 | -1 |
| ⋮ | | |
| 26 | +17 | -17 |
| 27 | +18 | -18 |
| 28 | +19 | -19 |
| 29 | +20 | -20 |
| ⋮ | | |
| 127 | +118 | -118 |

27

## FIG. 7

WEIGHTING MASK 1

| 1 | 3 | 1 |
|---|---|---|
| 3 | 5 | 3 |
| 5 | 8 |   |

$\times \dfrac{1}{29}$

$\Rightarrow$

6BIT(0~63)

| 3 | 6 | 4 |
|---|---|---|
| 6 | 10 | 6 |
| 10 | 18 |   |

R(0.0)=18

## FIG. 12

## FIG. 13

| 1 | 3 | 5 | 3 | 1 |
|---|---|---|---|---|
| 3 | 5 | 7 | 5 | 3 |
| 5 | 7 | 9 | 7 | 5 |
| 7 | 9 | 11 | 0 | 0 |

S=96

$[ \times \dfrac{1}{S} ]$

FIG. 8

EP 0 382 581 B1

# FIG. 9

EP 0 382 581 B1

FIG. 10

EP 0 382 581 B1

## FIG. 11

$$|f(i,j)+E(i,j)-(m1(i,j)+m0(i,j))/2|$$

| 7 BIT | B=1 | B=0 |
|---|---|---|
| 0 | -9 | +9 |
| 1 | -8 | +8 |
| ⋮ | | |
| 8 | -1 | +1 |
| 9 | 0 | 0 |
| 10 | +1 | -1 |
| ⋮ | | |
| 26 | +17 | -17 |
| 27 | +18 | -18 |
| 28 | 0 | 0 |
| 29 | 0 | 0 |
| ⋮ | | |
| 127 | 0 | 0 |

# FIG. 14

## (1) MULTI-LEVEL IMAGE

| f(i-2, j-1) | f(i-2, j) | f(i-2, j+1) |  |
|---|---|---|---|
| f(i-1, j-1) | f(i-1, j) | f(i-1, j+1) |  |
| f(i, j-1) | f( i, j ) | f( i, j+1 ) |  |
|  |  |  |  |

## (2) BINARY IMAGE

| B(i-2, j-1) | B(i-2, j) | B(i-2, j+1) |  |
|---|---|---|---|
| B(i-1, j-1) | B(i-1, j) | B(i-1, j+1) |  |
| B(i, j-1) | B( i, j ) |  |  |
|  |  |  |  |

## (3) WEIGHTING MASK

| R(2, 1) | R(2, 0) | R(2, -1) |
|---|---|---|
| R(1, 1) | R(1, 0) | R(1, -1) |
| R(0, 1) | R(0, 0) | R(0, -1) |

$R(0, 0) = R(0, -1) = 0$

# FIG. 15

f(i, j)+E(i, j)

m(i, j) — THRESHOLD

E(i, j+1)

(1)  f(i, j)+E(i, j)>m(i, j)

m(i, j) — THRSHOLD

E(i, j+1)

f(i, j)+E(i, j)

(2)  f(i, j)+E(i, j)≤m(i, j)

EP 0 382 581 B1

## FIG. 16

EP 0 382 581 B1

FIG. 17A

| 1/21 | 3/21 | 1/21 |
|------|------|------|
| 3/21 | 5/21 | 3/21 |
| 5/21 | 0 | 0 |

FIG. 17B

| 1/48 | 3/48 | 5/48 | 3/48 | 1/48 |
|------|------|------|------|------|
| 3/48 | 5/48 | 7/48 | 5/48 | 3/48 |
| 5/48 | 7/48 | 0 | 0 | 0 |

FIG. 20

FIG. 18

## FIG. 19

# FIG. 21

EP 0 382 581 B1